(19) Europäisches Patentamt
European Patent Office
Office européen des brevets

(11) **EP 4 357 154 B1**

(12) **EUROPEAN PATENT SPECIFICATION**

(45) Date of publication and mention
of the grant of the patent:
**15.01.2025 Bulletin 2025/03**

(21) Application number: **23202654.2**

(22) Date of filing: **10.10.2023**

(51) International Patent Classification (IPC):
*B60C 1/00* (2006.01)  *B60C 11/00* (2006.01)
*B60C 11/03* (2006.01)  *B60C 11/13* (2006.01)

(52) Cooperative Patent Classification (CPC):
**B60C 1/0016; B60C 11/005; B60C 11/0306;
B60C 11/13;** B60C 2011/0025; B60C 2011/0033;
B60C 2011/0353; B60C 2011/0355

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **19.10.2022 JP 2022167822**

(43) Date of publication of application:
**24.04.2024 Bulletin 2024/17**

(73) Proprietor: **Sumitomo Rubber Industries, Ltd.
Kobe-shi, Hyogo 651-0072 (JP)**

(72) Inventor: **MUKOGUCHI, Daiki
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 3 228 657    EP-A1- 3 950 386
EP-A1- 3 950 387    JP-A- 2021 172 213**

**Description**

TECHNICAL FIELD

The present invention relates to a tire.

BACKGROUND OF THE INVENTION

For example, a method of making a two-layer structure of a tread rubber of a pneumatic tire and using a foamed rubber for a rubber layer inside the two-layer structure is known as a method of suppressing a vibrating sound (noise) from a tire during running (JP H06-156016 A).

As a tread part of a conventional tire abrades, rigidity of a land part of a tread becomes high, and an effect of suppressing a vibration sound is also deteriorated. Therefore, as running is repeatedly performed, noise tends to become loud.

The document EP 3950387 A discloses a tire having a tread comprising a first rubber layer constituting a tread surface, a second rubber layer adjacent to inside in a tire radial direction of the first rubber layer, and a third rubber layer adjacent to inside in a tire radial direction of the second rubber layer.

SUMMARY OF THE INVENTION

It is an object of the present invention to provide a tire in which deterioration of noise performance after abrasion is suppressed.

As a result of intensive studies, the present inventor has found that the above-described problem is solved by stacking three or more rubber layers on a tread part of a tire, making a rubber component of an outermost layer constituting a tread surface to comprise a styrene-butadiene rubber having a predetermined glass transition temperature, the glass transition temperature of the outermost layer being in a predetermined range, and making a complex elastic modulus at 30°C of the outermost layer, $E^*_T$, in MPa, greater than a complex elastic modulus at 30°C of an innermost layer, $E^*_B$, in MPa.

That is, the present invention relates to:

a tire comprising a tread part,
wherein the tread part comprises

an outermost layer constituting a tread surface,
an innermost layer adjacent to an outer side of a belt layer in a tire radial direction, and
one or more intermediate layers located between the outermost layer and the innermost layer,

wherein each of the outermost layer, the innermost layer, and the intermediate layer is composed of a rubber composition comprising a rubber component,
wherein the rubber component constituting the outermost layer comprises a styrene-butadiene rubber having a glass transition temperature of -80°C or higher and -40°C or lower,
wherein a glass transition temperature T, in °C, of a rubber composition constituting the outermost layer is -35 or higher, and
wherein, when a complex elastic modulus at 30°C of the outermost layer is defined as $E^*_T$, in MPa, and a complex elastic modulus at 30°C of the innermost layer is defined as $E^*_B$, in MPa, $E^*_T > E^*_B$.

According to the present invention, provided is a tire in which deterioration of noise performance after abrasion is suppressed.

BRIEF DESCRIPTION OF THE DRAWINGS

FIG. 1 is a cross-sectional view of one example of a tire that is one embodiment of the present invention.
FIG. 2 is a schematic view of a ground-contacting surface of a tire when a tread is pressed against a flat surface.
FIG. 3 is a cross-sectional view showing a part of a tread of a tire according to one embodiment of the present invention.
FIG. 4 is a cross-sectional view showing a part of a tread of a tire according to one embodiment of the present invention.

DETAILED DESCRIPTION

The tire that is one embodiment of the present invention is a tire comprising a tread part, wherein the tread part comprises an outermost layer constituting a tread surface, an innermost layer adjacent to an outer side of a belt layer in a tire radial direction, and one or more intermediate layers located between the outermost layer and the innermost layer, wherein each of the outermost layer, the innermost layer, and the intermediate layer is composed of a rubber composition comprising a rubber component, wherein the rubber component constituting the outermost layer comprises (preferably 50% by mass or more and 90% by mass or less of) a styrene-butadiene rubber having a glass transition temperature of -80°C or higher and -40°C or lower, wherein a glass transition temperature T, in °C, of a rubber composition constituting the outermost layer is -35 or higher, and wherein, when a complex elastic modulus at 30°C of the outermost layer is defined as $E^*_T$, in MPa, and a complex elastic modulus at 30°C of the innermost layer is defined as $E^*_B$, in MPa, $E^*_T > E^*_B$.

By stacking three or more rubber layers on a tread part of a tire, making a rubber component of an outermost layer constituting a tread surface to comprise a styrene-butadiene rubber having a predetermined glass transition temperature, the glass transition temperature of the outermost layer being within a predetermined range, and making a complex elastic modulus at 30°C of the outermost layer greater than a complex elastic modulus at 30°C of an innermost layer, deterioration of noise performance of the obtained tire after abrasion is suppressed. The reason for that is considered as follows, although the following consideration is not intended to be bound by any theory.

When the tread part of the tire of the present invention is composed of three or more rubber layers, a groove bottom becomes three or more layers. It is considered that vibration of the tread part is caused not only by a land part contacting a road surface but also by resonance of adjacent land parts. In land parts of the tread, an intermediate layer mainly touches a road surface after abrasion, and vibration needs to pass through a groove bottom part in order for the vibration to be transmitted to adjacent land parts. In this case, where a shock is transmitted via an outermost layer of a groove bottom, the shock is transmitted from the intermediate layer to the outermost layer once, and thus it is considered that a damping effect on the shock can be obtained on this interface. Moreover, in a case where a shock is transmitted via an intermediate layer of the groove bottom part, the intermediate layer of the groove bottom part has a small volume, so that transmission of the shock is suppressed. From the above-described matters, transmission of a shock between adjacent land parts is easily inhibited, and it is considered that vibration in land parts can be easily suppressed.

Moreover, when a styrene-butadiene rubber having a low glass transition temperature is compounded in the rubber composition of the outermost layer, polymer chains easily move in the rubber composition of the outermost layer, and it is considered that a shock can be easily absorbed in the outermost layer. When the glass transition temperature of the rubber composition is increased at the same time, heat generation can be enhanced. From the above-described matters, it becomes easy for the polymer chains and the entire rubber composition to absorb a shock, and it is considered that propagation can be easily suppressed.

Furthermore, when the innermost layer is made softer than the outermost layer, a tread surface side becomes easy to selectively receive a shock at an end part of a land part after abrasion, absorbency of shock in an inner part of the outermost layer can be easily obtained. Additionally, as the intermediate layer is present, it is considered that a shock becomes less likely to propagate to the innermost layer.

From the above-described matters, transmission of vibration between adjacent land parts is suppressed, and, at ends of land parts, the outermost layer remaining after abrasion is in a state where the outermost layer easily absorbs a shock, and suppression and absorbency of transmission of a shock at the groove bottom part are improved after abrasion, so that it is considered that a remarkable effect of suppressing deterioration of noise performance after abrasion is achieved.

A thickness t1, in mm, of the outermost layer, a thickness of t2, in mm, of the intermediate layer, and T preferably satisfy the following inequality (1),

$$(t1/t2) \times |T| > 0.90 \quad \cdots \quad (1).$$

When $(t1/t2) \times |T|$ is within the above-described range, a ratio of the outermost layer at the groove bottom part and heat generation of the outermost layer can be sufficiently secured, and it is considered that it becomes easy to obtain an effect of suppressing transmission of a shock.

The rubber composition constituting the outermost layer preferably comprises silica having an average primary particle size of 18 nm or less from the viewpoints of enhancing heat generation and facilitating absorption of shock.

A total content of silica and a softening agent based on 100 parts by mass of the rubber component of the rubber composition constituting the outermost layer is preferably 110 parts by mass or more.

When the total content of silica and the softening agent is within the above-described range and the amount of these components is made greater than an amount of the rubber component, it is considered that the effect of suppressing propagation of a shock transmitting to polymer chains and an effect of absorbing a shock in the outermost layer can be easily obtained.

The rubber composition constituting the outermost layer preferably comprises a softening agent comprising a resin component. Moreover, a content of the resin component in the softening agent is preferably 30% by mass or more.

When the content of the resin component in the softening agent is within the above-described range, the resin component interacts with a styrene part in the rubber component, and it is considered that shock can be easily absorbed.

It is preferable that the tread part comprises two or more circumferential grooves extending continuously in a tire circumferential direction, a pair of shoulder land parts partitioned off by the circumferential grooves and ground-contacting ends, and a center land part located between the pair of shoulder land parts, and that a deepest part of a groove bottom in at least one circumferential groove among the circumferential grooves is preferably formed to be located inside in the tire radial direction with respect to an outermost part of the intermediate layer.

When an interface between the intermediate layer and the outermost layer is located outside in the tire radial direction with respect to the deepest part of the groove bottom, the intermediate layer is easily exposed when the tire abrades, and it is considered that it becomes easy to obtain the effects of the present invention.

When a distance between a line segment connecting tread surface ends and a straight line parallel to the line segment and passing through the deepest part in the circumferential groove comprising the deepest part is defined as $H_1$, in mm, $H_1$, t1, and $E^*_T$ preferably satisfy the following inequality (2),

$$E*_T/(t1/H_1) \geq 6.0 \quad \cdots \quad (2).$$

When $t1/H_1$ is small, a distance over which vibration is transmitted from a road surface to the intermediate layer becomes short. When the outermost layer is softened accordingly, it is considered that vibration can be easily absorbed in the outermost layer.

In the tire of the present invention, when a groove width, in a tread surface, of the circumferential groove located on the outermost side when the tire is mounted on a vehicle is defined as $L_0$ and a groove width at a 95% position of the deepest part of the groove bottom of the circumferential groove located on the outermost side when the tire is mounted on the vehicle is defined as $L_{95}$, $L_{95}/L_0$ is preferably 0.20 to 0.80.

When $L_{95}/L_0$ is within the above-described range, it becomes easy to uniformly form a plurality of rubber layers on lateral surfaces of land parts during production of the tire, and thus it is considered that it becomes easy to suppress deterioration of noise performance.

In the tire of the present invention, a ratio of an area of a land part in a ground-contacting surface is preferably 60% or more and 80% or less.

When the ratio of the area of the land part in the ground-contacting surface is within the above-described range, parts locally receiving vibration from a road surface can be reduced, and thus it is considered that it becomes easy to improve noise performance as well.

A ratio of groove areas in the shoulder land parts is preferably greater than a ratio of a groove area in the center land part.

When the ratio of the groove areas in the shoulder land parts is greater than the ratio of the groove area in the center land part, an increase in local input can be easily suppressed in the center land part contacting the ground during a rolling motion, and it is considered that noise performance can also be easily improved.

The tire of the present invention preferably comprises, on a tire inner circumferential surface of the tread part, one or more low-density members selected from the group consisting of a sealant layer, a noise suppressing body, and a three-dimensional network structure.

When low-density members are provided on the tire inner circumferential surface, vibration in the tread part can be cancelled with these low-density members vibrating inside the tire when the vibration propagates from the tread surface, so that it is considered that effects of the present invention can be expected to be exhibited.

<Definition>

A "tread part" is a member adjacent to an outer side of a belt layer in a tire radial direction. A "belt layer" refers to a layer provided outside in a tire radial direction with respect to a carcass layer and is applicable to a plurality of working layers in which reinforcing members inside are inclined at about 18 to 30° with respect to the tire circumferential direction and which overlap one another in opposite directions; a circumferential belt layer in which a reinforcing member inside is oriented at an angle of ±10° with respect to the tire circumferential direction; and the like.

The "standardized rim" is a rim, in a standard system including a standard on which the tire is based, defined for each tire by the standard. The standardized rim refers to, for example, a "standard rim" in JATMA, "Measuring Rim" in ETRTO, or "Design Rim" in TRA. JATMA, ETRTO, and TRA are referred to in this order, and when an applicable size is found during reference to the standard, a standardized rim is based on that standard. Besides, in a case of a tire whose size is not defined in the above-described standard system, the "standardized rim" refers to a rim having the narrowest width among rims that can be rim-assembled to the tire, that do not cause air leakage between the rim and the tire, and that have the smallest diameter.

A "standardized internal pressure" is an air pressure, in a standard system including a standard on which the tire is based, defined for each tire by the standard, i.e., the "MAXIMUM AIR PRESSURE" in JATMA, "INFLATION PRESSURE" in ETRTO, or the "maximum value" described in the table "TIRE LOAD LIMITS AT VARIOUS COLD INFLATION PRESSURES" in TRA. Like the standardized rim, JATMA, ETRTO, and TRA are referred to in this order, and when an applicable size is found during reference to the standard, a standardized internal pressure is based on that standard. Besides, in a case of a tire whose size is not defined in the standard, the standardized internal pressure refers to a standardized internal pressure (provided that the standardized internal pressure is 250 kPa or more) for another tire size for which the standardized rim is described as a standard rim (and which is defined by the standard). Besides, in a case where a plurality of standardized internal pressures of 250 kPa or more are described, the standardized internal pressure refers to the minimum values among them.

A "standardized state" is a state in which a tire is rim-assembled to a standardized rim, filled with air at a standardized internal pressure, and applied with no load. Besides, in the present specification, unless otherwise noted, dimensions of each part of the tire are measured in the standardized state.

A "standardized load" means a load in a standard system including a standard on which the tire is based, defined for each tire by the standard. The "MAXIMUN LOAD CAPACITY" in JATMA, "LOAD CAPACITY" in ETRTO, and the "maximum value" described in the table "TIRE LOAD LIMITS AT VARIOUS COLD INFLATION PRESSURES" in TRA are standardized loads. Like the standardized rim, JATMA, ETRTO, and TRA are referred to in this order, and when an applicable size is found during reference to the standard, a standardized load is based on that standard. Besides, in a case of a tire whose size is not defined in the standard, the standardized load $W_L$ is calculated as follows,

$$V = \{(Dt/2)^2 - (Dt/2 - Ht)^2\} \times \pi \times Wt$$

$$W_L = 0.000011 \times V + 175,$$

where $W_L$ is a standardized load, in kg, V represents a virtual volume of the tire, in mm$^3$, Dt represents a tire outer diameter Dt, in mm, Ht represents a tire cross-sectional height, in mm, and Wt represents a tire cross-sectional width, in mm.

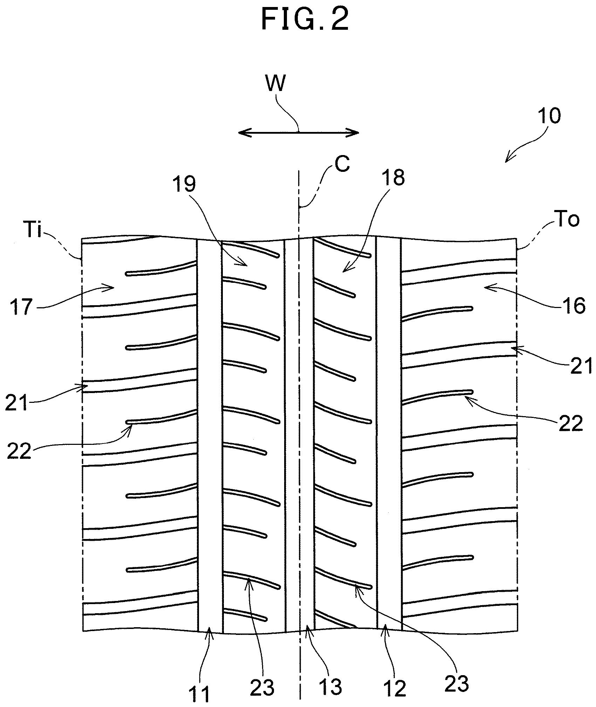

A "ground-contacting end" is a ground-contacting position on the outermost side in a tire width direction (a horizontal direction in FIG. 2) when a standardized load is applied to the tire in a standardized state and the tire contacts a flat surface at a camber angle of 0°.

A "Land part" refers to an area partitioned off, in the tread part, by the ground-contacting ends and a plurality of circumferential grooves extending continuously in a tire circumferential direction. For example, in a case that the number of circumferential grooves is two, the land part is divided into a pair of shoulder land parts and a center land part sandwiched therebetween, and in a case that the number of circumferential grooves is three, the center land part is further divided into a land part located on an inner side of a vehicle when the tire is mounted to the vehicle, and a land part located on an outer side of the vehicle.

A "groove" including a circumferential groove and a lateral groove refers to a recess having a width at least larger than 2.0 mm. On the other hand, a "sipe" refers to a narrow notch having a width of 2.0 mm or less, preferably 0.5 to 2.0 mm.

A "total area of a ground-contacting surface" is a total area in a state where all the grooves are filled in a ground-contacting shape obtained when, in a standardized state, a standardized load is applied to a tire and a tread is pressed against a flat surface at a camber angle of 0°. A "ratio of an area of a land part in a ground-contacting surface" refers to a ratio of a total area of shoulder land parts and a center land part to a total area of a ground-contacting surface.

A "ratio of groove areas in shoulder land parts" refers to a total area of a lateral groove and/or a sipe traversing the shoulder land parts to a total area of shoulder land parts. A "ratio of a groove area in a center land part" refers to a total area of a lateral groove and/or a sipe traversing the center land part to a total area of the center land part.

A "thickness of each rubber layer constituting a tread part" refers to a thickness of each lubber layer on a tire equatorial plane CL on a cross-section obtained by cutting a tire along a plane including a tire rotation axis. For example, a thickness of an outermost layer refers to a direct distance in a tire radial direction from a tread outermost surface to an interface on an inner side of an outermost layer in the tire radial direction on a tire equatorial plane CL. Besides, when a circumferential groove is provided on the tire equatorial plane CL, the thickness of each rubber layer constituting the tread part is defined as a thickness of each rubber layer in a central part of a land part nearest to the tire equatorial plane in the tire width direction. A "land part nearest to the tire equatorial plane" refers to a land part having a groove edge of a circumferential groove present on the tire equatorial plane, the groove edge being nearest to the tire equatorial plane.

When such land parts are present on both lateral sides in the tire width direction, the thickness of each rubber layer constituting the tread part is defined as an average value of thicknesses of each rubber layer in the central parts of these two land parts in the tire width direction. Moreover, when an electrically conductive member or the like is present on a land part on the tire equatorial plane, which makes an interface unclear, a thickness shall be measured with interfaces blocked by the electrically conductive member or the like being virtually joined together.

A "softening agent" is a material giving a rubber component plasticity and is a component extracted from a rubber composition using acetone. Examples of the softening agent includes a softening agent that is a liquid (in a liquid state) at 25°C and a softening agent that is a solid at 25°C. However, the examples of the softening agent shall not include wax and stearic acid commonly used in the tire industry.

A "content of a softening agent" also comprises an amount of a softening agent contained in an extended rubber component previously extended with the softening agent such as oil, a resin component, a liquid rubber component, and the like. Moreover, the same applies to a content of oil, a content of a resin component, and a content of a liquid rubber, and for example, in a case where the extending component is oil, the extending oil is included in the content of oil.

<Measuring method>

A "total area S of a ground-contacting surface", a "total area of shoulder land parts", a "total area of a center land part", and a "total area of a lateral groove and/or sipe" traversing these land parts are values calculated based on the ground-contacting shape. The ground-contacting shape is obtained, for example, by applying an ink to a tread part 1, applying standardized load to the tread part 1 to vertically press the tread part 1 against a cardboard or the like, and transferring the ink applied to the tread part 1, after mounting a standardized rim to a tire and keeping the standardized pressure. Moreover, from the obtained ground-contacting shape, a sum of areas of shoulder land parts in a state where all of a lateral groove and a sipe traversing the shoulder land parts are filled is defined as a total area of shoulder land parts, and a sum of an area of a center land part in a state where all of a lateral groove and a sipe traversing the center land part are filled is defined as a total area of a center land part.

A "30°CE*" is a complex elastic modulus, in MPa, measured under a condition of a temperature at 30°C, a frequency of 10 Hz, an initial strain of 5%, a dynamic strain of $\pm 1\%$, and an extension mode. A sample for measurement in this case is a vulcanized rubber composition having a length of 20 mm, a width of 4 mm, and a thickness of 1 mm. In a case where the sample is prepared by being cut out from a tire, the sample is cut out from a tread part of the tire such that the tire circumferential direction becomes a long side and the tire radial direction becomes a thickness direction.

A "30°C tan $\delta$" is a loss tangent measured under a condition of a temperature at 30°C, a frequency of 10 Hz, an initial strain of 5%, a dynamic strain of $\pm 1\%$, and an extension mode. A sample for measurement in this case is prepared in the similar manner as in the case of the 30°CE*.

A "glass transition temperature (Tg)" is a value measured by making a measurement according to JIS K 7121:2012 using a differential scanning calorimeter (Q200) manufactured by TA Instruments Japan Inc. while raising a temperature at a temperature rising rate of 10°C/min. For example, Tg is applied to a rubber component such as a SBR and the like.

A "glass transition temperature (Tg) of a rubber layer" is determined as a temperature corresponding to the greatest value of a tan $\delta$ (tan $\delta$ peak temperature) in a temperature distribution curve of the tan $\delta$ in a range of -60°C to 40°C, wherein the temperature distribution curve is obtained by measurement performed using a dynamic viscoelasticity measuring device (for example, EPLEXOR series manufactured by gabo Systemtechnik GmbH) under a condition of a frequency of 10 Hz, an initial strain of 10%, an amplitude of $\pm 0.5\%$, and a temperature rising rate of 2°C/min. In a case where there are two temperature points at which the tan $\delta$ has the maximum value in the range of - 60°C to 40°C, the lowest temperature point of these temperatures points is defined as Tg. Moreover, in a case where a temperature distribution curve is obtained in which a tan $\delta$ decreases gradually with an increase of temperature in the range of -60°C to 40°C, the Tg is defined as -60°C from the above-described definition. A sample for measurement in this case is prepared in the similar manner as in the case of the 30°CE*.

A "styrene content" is a value calculated by $^1$H-NMR measurement and is applied to a rubber component having a repeating unit derived from styrene, such as, for example, a SBR and the like.

A "vinyl content (1,2-bond butadiene unit amount)" is a value calculated in accordance with JIS K 6239-2:2017 by an infrared absorption spectrum analysis and is applied to a rubber component having a repeating unit derived from butadiene, such as, for example, a SBR, a BR, and the like.

A "cis content (cis-1,4-bond butadiene unit amount)" is a value calculated in accordance with JIS K 6239-2:2017 by an infrared absorption spectrum analysis and is applied to a rubber component having a repeating unit derived from butadiene, such as, for example, a BR and the like.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation). For example, the Mw is applied to, for example, a SBR, a BR, or the like.

A "nitrogen adsorption specific surface area ($N_2SA$) of carbon black" is measured in accordance with JIS K 6217-2:2017. A "nitrogen adsorption specific surface area ($N_2SA$) of silica" is measured in accordance with ASTM D3037-93 by a BET method. An "average primary particle size of silica" can be calculated by making observations with a transmission or scanning electron microscope, measuring 400 or more primary particles of silica observed in the field of view, and averaging them.

A procedure for producing a tire that is one embodiment of the present invention will be described below in detail. However, the following descriptions are illustrative for explaining the present invention, and are not intended to limit the technical scope of the present invention to this description range only.

[Tire]

A tire of one embodiment of the present invention is described below with reference to the drawings. Besides, the embodiment described below is merely one example, and the tire of the present invention is not limited to the embodiment described below.

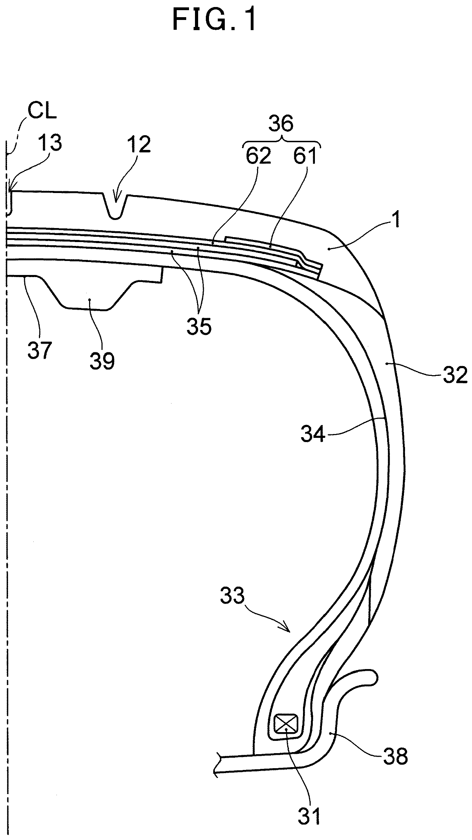

FIG. 1 is a cross-sectional view of a tire in a plane passing through a tire rotation axis and illustrates only a right-side part of the tire obtained by dividing the tire by a tire equatorial plane CL. The tire of FIG. 1 comprises a tread part 1, a sidewall 32, a bead part 33, a carcass 34, a belt 35, a band 36, and a rim 38. The tread part 1 is composed of three or more rubber layers (not shown) comprising an outermost layer 6 constituting a tread surface. The bead part 33 comprises a bead core 31. The carcass 34 may comprise a carcass cord (not shown). The belt 35 may include a belt cord (not shown). The band 36 consists of an edge band 61 covering only an edge part of the belt 35 and a full band 62 covering the whole area of the belt 5. Both the edge band 61 and the full band 62 may include a band cord (not shown).

FIG. 2 is a schematic view of a ground-contacting surface of the tire when the tread part 1 is pressed against a flat surface. A tread pattern by which a direction of mounting to a vehicle is designated is formed on the tread part 1. The tread pattern of the tread part 1 is formed in a shape asymmetric with respect to a tire equator C.

The tread part 1 comprises an outer ground-contacting end To and an inner ground-contacting end Ti. The outer ground-contacting end To is located on an outer side of a vehicle (on the right side in FIG. 2) when the tire is mounted to the vehicle. The inner ground-contacting end Ti is located on the inner side of the vehicle (on the left side in FIG. 2) when the tire is mounted to the vehicle.

The tread part 1 has a plurality of circumferential grooves 11, 12, and 13 extending continuously in a circumferential direction C. In FIG. 2, three circumferential grooves 11, 12, and 13 are provided. However, the number of circumferential grooves is not particularly limited and may be, for example, two to five. Moreover, although the circumferential grooves 11, 12, and 13 linearly extends along the circumferential direction C in the present embodiment, these circumferential grooves are not limited to such an aspect and may extend along the circumferential direction C, for example, in a wavy, sinusoidal, or zigzag shape, etc.

"Shoulder land parts" in the present embodiment refer to a pair of land parts formed between a circumferential groove located on an outermost side in a width direction W from a tire equator C and each of the ground-contacting ends To and Ti. In FIG. 2, an outer shoulder land part 16 is provided which is formed between a circumferential groove 12 located on the outermost side when the tire is mounted to a vehicle and the outer ground-contacting end To, and an inner shoulder land part 17 is provided which is formed between a circumferential groove 11 located on an innermost side when the tire is mounted to the vehicle and the inner ground-contacting end Ti.

A "center land part" in the present embodiment refers to all land parts located between the pair of the shoulder land parts. In FIG. 2, an outer center land part 18 is provided which is formed between a circumferential groove 13 provided along a tire equator C and a circumferential groove 12 located on an outermost side when the tire is mounted to a vehicle, and an inner center land part 19 is provided which is formed between the circumferential groove 13 provided along the tire equator C and a circumferential groove 11 located on an innermost side when the tire is mounted to the vehicle. However, the number of center land parts is not particularly limited and may be, for example, one to five.

The shoulder land parts 16 and 17 and the center land parts 18 and 19 of the present embodiment are each provided with a lateral groove and/or a sipe traversing these land parts. In FIG. 2, each of the shoulder land parts 16 and 17 is provided with a plurality of shoulder lateral grooves 21, each terminal of which opens to the circumferential groove 1 and a plurality of shoulder sipes 22, each one end of which opens to the circumferential groove 11 or 12, and each of center land parts 18 and 19 is provided with a plurality of center sipes 23, each one end of which opens to the circumferential groove 11 or 13.

A ratio of groove areas in the shoulder land parts is preferably greater than a ratio of a groove area in the center land part. When the ratio of groove areas in the shoulder land parts is greater than the ratio of the groove area in the center land part, it becomes easy for the shoulder land parts to deform during a cornering motion, and forces can be easily generated from the shoulder land parts. Moreover, an increase in local input can be easily suppressed in the center land part contacting a ground during a rolling motion, and it is considered that noise performance can also be easily improved.

The ratio of groove areas in the shoulder land parts is preferably 15% or more, more preferably 20% or more, further preferably 25% or more. Moreover, the ratio of groove areas in the shoulder land parts is preferably 50% or less, more preferably 45% or more, further preferably 40% or more.

The ratio of a groove area in the center land part is preferably 10% or more, more preferably 15% or more, further preferably 20% or more. Moreover, the ratio of a groove area in the center land part is preferably 45% or less, more preferably 40% or less, further preferably 35% or less.

A ratio of an area of a land part in the ground-contacting surface is preferably 60% or more, more preferably 63% or more, further preferably 65% or more. Moreover, the ratio of the area of the land part in the ground-contacting surface is preferably 80% or less, more preferably 77% or less, further preferably 75% or less. When the ratio of the area of the land part in the ground-contacting surface is within the above-described ranges, it becomes easy to transmit a force through the entire tread during a cornering motion, and parts locally receiving vibration from a road surface can be reduced, so that it is considered that it becomes easy to improve noise performance as well.

<Low-density member>

In the tire according to the present embodiment, a low-density member can be provided on a tire inner circumferential surface of the tread part. The low-density member is not particularly limited as long as it has an effect of canceling out vibrations propagating to the tire inner circumferential surface by resonance. Examples of such a low-density member include, for example, a sealant layer used for prevention of puncture, a noise suppressing body, a three-dimensional network structure, and the like.

The low-density member can exhibit its effects when it is arranged on the tire inner circumferential surface of the tread part. Although the thickness of the low-density member in the tire radial direction and the width of the low-density member in a tire rotation axis direction, or the volume or the cross-sectional area and the other properties of the low-density member can vary depending on types of the low-density member or the like, a person skilled in the art can appropriately determine them.

The low-density member can be used alone, or two or more thereof can be used in combination. Examples of such combination include, but not limited to, for example, combination made by first disposing a sealant layer on the tire inner circumferential surface of the tread part and further disposing, on the sealant layer, a noise suppressing body, a three-dimensional network structure, or the like.

(Sealant layer)

As the sealant layer, those used for the tire inner circumferential surface of the tread part, generally for preventing puncture, can be appropriately used. Specific examples of such a sealant layer include, for example, one described in JP 2020-23152 A. The thickness of the sealant layer is preferably 1 mm or more and 10 mm or less. The width of the sealant layer is preferably 85% or more and 115% or less, preferably 95% or more and 105% or less, of a maximum width of a belt layer.

(Noise suppressing body)

As the noise suppressing body, any noise suppressing body that can exhibit a noise suppressing effect in a tire lumen can be appropriately used. Specific examples of such a noise suppressing body include, for example, one described in JP 2019-142503 A. The noise suppressing body is formed of, for example, a porous sponge material. The sponge material is a spongiform porous structure, and examples of the sponge material include, for example, a so-called sponge itself having open cells, which is obtained by foaming a rubber or a synthetic resin, and web-like one obtained by entwining animal fibers, plant fibers, synthetic fibers, or the like to integrally couple these fibers to each other. Moreover, examples of the "porous structure" include one having not only open cells but also closed cells. Examples of the noise suppressing body include an open-cell sponge material formed of polyurethane. As the sponge material, for example, a synthetic resin sponge such as an ether-based polyurethane sponge, an ester-based polyurethane sponge, a polyethylene sponge, and the like, and a rubber sponge such as a chloroprene rubber sponge (CR sponge), an ethylene-propylene rubber sponge (EDPM sponge), a nitrile rubber sponge (NBR sponge), and the like can be appropriately used, and among them, a polyurethane-based sponge including an ether-based polyurethane sponge, a polyethylene-based sponge, and the like are particularly preferable from the viewpoints of noise suppressing property, light weight property, foaming adjustability, durability, and the like.

A noise suppressing body 39 forms a long strip shape having a bottom surface firmly fixed to a lumen surface of the tread part, and extends in the tire circumferential direction. At this time, the outer end parts in the circumferential direction may be butted against each other to form a substantially annular shape and may be also separated from each other in the circumferential direction. The noise suppressing body 39 has substantially the same cross-sectional shape at each position in the circumferential direction other than the outer edge parts. This cross-sectional shape is preferably flat and oblong with a height smaller than a width in a tire axial direction in order to prevent the tire from tipping over and deforming during running. In particular, if a concave groove 7 extending continuously in the circumferential direction is provided on the inner surface side in the radial direction, the surface area of the noise suppressing body can be increased to absorb more resonance energy, and heat dissipation can be enhanced to suppress a temperature rise of the sponge material.

The glass transition temperature (Tg) of the noise suppressing body is preferably -55°C or more and -45°C or less from the viewpoint of well keeping durability and flexibility. When the flexibility of the noise suppressing body is kept under a low temperature, the noise suppressing body effectively converts vibration energy of air into thermal energy, for example, even during running in cold environments, and running noise is sufficiently reduced. In the present specification, the Tg is a value measured using a differential scanning calorimeter SC Q2000 manufactured by TA Instruments in accordance with ASTM D 6604 (published on 2013).

A density of the noise suppressing body is preferably $1.0 \times 10^{-2}$ g/cm$^3$ or more and $4.0 \times 10^{-2}$ g/cm$^3$ or less from the viewpoint of reduction in running noise without causing an increase in tire weight.

A volume of the noise suppressing body is desirably 0.4 to 30% of a total volume of the tire lumen from the viewpoints of sufficient conversion of vibration energy of air and the like. The volume of the noise suppressing body means an apparent total volume of the noise suppressing body, the apparent total volume being determined from a contour including inner air bubbles. In the present specification, the total volume V of the tire lumen shall be approximately calculated, by the following equation (3), in a standardized state where a pneumatic tire is rim-assembled to a standardized rim, is filled with air at a standardized internal pressure, and applied with no load. Besides, "A" below refers to an area surrounded by a tire lumen surface and a line segment connecting end points on an inner side of a pair of bead parts in the tire radial direction,

$$V = A \times \{(Di - Dr) / 2 + Dr\} \times \pi \quad \cdots \quad (3),$$

wherein, "A" denotes a lateral cross-sectional area, in mm, of a tire lumen obtained by performing a CT scan on the tire-rim assembly in the standardized state, "Di" denotes a maximum outer diameter, in mm, of the tire lumen surface in the standardized state, and "Dr" is a rim diameter, in mm.

A tensile strength of the noise suppressing body is preferably 70 kPa or more and 115 kPa or less from the viewpoints of durability of the noise suppressing body and the like.

(Three-dimensional network structure)

As the three-dimensional network structure, in general, any three-dimensional network structure acting as a noise absorbing material can be appropriately used. Specific examples of such noise absorbing material include, for example, one described in JP 2018-90131 A. More specifically, the three-dimensional network structure is one formed by irregularly entwining a plurality of wires in which resin is melted; and welding the entwined parts.

The three-dimensional network structure is preferably fixed to the tire lumen. A method of fixing this structure to the tire lumen is not particularly limited, and the three-dimensional network structure may be adhered to the inner surface of the tire with, for example, an adhesive or the like, but the three-dimensional network structure can also be fixed by a sealant material forming the above-described sealant layer, which is preferable.

A thickness of the three-dimensional network structure is, but not particularly limited to, preferably 1.0 mm or more and 150 mm or less, more preferably 30 mm or more and 120 mm or less. A width of the structure is, but not limited to, preferably 50% or more and 95% or less of the width of the sealant layer, more preferably 60% or more and 90% or less of the width of the sealant layer, for the reason that the effects are more appropriately obtained.

A ratio of a cross-sectional area of the three-dimensional network structure (that is, (a cross-sectional area of the three-dimensional network structure/a cross-sectional area of the tire lumen)×100) is preferably 2% or more and 90% or less, more preferably 5% or more and 80% or less, further preferably 20% or more and 70% or less, from the viewpoint of an efficient noise absorption performance. Here, in order to change the ratio of the cross-sectional area, for example, the width or thickness of the three-dimensional network structure may be changed. The cross-sectional area of the three-dimensional network structure means an apparent cross-sectional area of the three-dimensional network structure, the apparent cross-sectional area being determined from a contour of the three-dimensional network structure including its inner cavity. The cross-sectional area of the three-dimensional network structure is calculated by dividing the volume of the three-dimensional network structure by an average thickness of the three-dimensional network structure (a thickness in a tire radial direction). Here, the volume of the three-dimensional network structure means an apparent total volume of the three-dimensional network structure, the apparent total volume being determined from the contour of the three-dimensional network structure including its inner cavity. Moreover, the average thickness of the three-dimensional network structure also means an average thickness determined from the contour of the three-dimensional network structure including its inner cavity. Moreover, in the present specification, the cross-sectional area of the tire lumen is calculated by dividing the total volume of the tire lumen by a height of the tire lumen in the tire radial direction.

An apparent density of the three-dimensional network structure is preferably 1.0 g/cm$^3$ or more and $25.0 \times 10^{-2}$ g/cm$^3$ or less, more preferably 2.0 g/cm$^3$ or more and $20.0 \times 10^{-2}$ g/cm$^3$ or less, further preferably 3.0 g/cm$^3$ or more and $10.0 \times 10^{-2}$ g/cm$^3$ or less, from the viewpoint of an efficient noise absorption performance. Besides, in the present specification, the apparent density means a density calculated by regarding the cavity present inside the three-dimensional network structure as the volume of the three-dimensional network structure as well and is calculated by dividing the mass of the three-dimensional network structure by the apparent total volume of the three-dimensional network structure (the volume determined from the contour of the three-dimensional network structure including its inner cavity). Specifically, the apparent density can be calculated by preparing a cubic measurement sample having an approximate shape of 1 m $\times$ 1 m $\times$ 1 m, using the three-dimensional network structure; and measuring a mass of the prepared measurement sample.

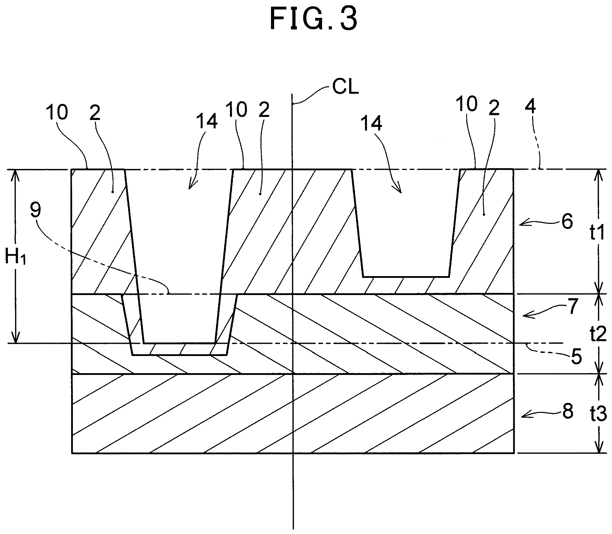

FIG. 3 is an enlarged cross-sectional view illustrating a part of the tread of the tire. In FIG. 3, the vertical direction is a tire radial direction, the horizontal direction is a tire width direction, and a direction perpendicular to a paper surface is a tire circumferential direction.

The tread part of the tire according to the present embodiment comprises an outermost layer 6 constituting a tread surface, an innermost layer 8 adjacent to an outer side of a belt layer in a tire radial direction, and an intermediate layer 7 located between the outermost layer 6 and the innermost layer 8 (hereinafter, they may be simply described as an "outermost layer 6", an "intermediate layer 7", and an "innermost layer 8", respectively). The intermediate layer 7 may be a single layer or may be divided into two or more layers in the tire radial direction. The outermost layer 6 typically corresponds to a cap tread. The innermost layer 8 typically corresponds to a base tread or an under tread. As a typical shape of the intermediate layer 7 has not been determined, the intermediate layer 7 may be a base tread or an under tread.

In FIG. 3, a double-headed arrow t1 indicates a thickness of the outermost layer 6, a double-headed arrow t2 indicates a thickness of the intermediate layer 7, and a double-headed arrow t3 indicates a thickness of the innermost layer 8. Besides, in a case where a circumferential groove is provided on the tire equatorial plane CL as described above, a thickness of each rubber layer constituting the tread part is defined as a thickness of each rubber layer in a center part, in a tire width direction, of a land part nearest to the tire equatorial plane.

The thickness t1 of the outermost layer 6 is, but not particularly limited to, preferably 1.0 mm or more, more preferably 1.5 mm or more, further preferably 2.0 mm or more, from the viewpoint of facilitating formation of the outermost layer at the groove bottom part. On the other hand, an upper limit of the thickness t1 is, but not particularly limited to, preferably 7.0 mm or less, more preferably 6.5 mm or less, further preferably 6.0 mm or less.

The thickness t2 of the intermediate layer 7 is, but not particularly limited to, preferably 1.0 mm or more, more preferably 1.5 mm or more. Moreover, the maximum thickness t2 of the intermediate layer 7 is preferably 10.0 mm or less, more preferably 9.0 mm or less, further preferably 8.0 mm or less.

The thickness t3 of the innermost layer 8 is, but not particularly limited to, preferably 2.0 mm or more, more preferably 2.5 mm or more, further preferably 3.0 mm or more. Moreover, the maximum thickness t3 of the innermost layer 8 is preferably 10.0 mm or less, more preferably 9.0 mm or less, further preferably 8.0 mm or less.

A ratio of t1 to t2 (t1/t2) is preferably 0.20 or more, more preferably 0.30 or more, further preferably 0.40 or more, particularly preferably 0.50 or more, from the viewpoint of the effects of the present invention. On the other hand, t1/t2 is preferably 4.0 or less, more preferably 2.0 or less, further preferably 1.0 or less, particularly preferably 0.90 or less.

In the tire according to the present embodiment, a deepest part of a groove bottom of at least one circumferential groove among the circumferential grooves is preferably formed to be located on an inner side in the tire radial direction with respect to an outermost part of the intermediate layer. In FIG. 3, a deepest part of a groove bottom of a circumferential groove 14 having the deepest groove depth among the plurality of circumferential grooves 14 is formed to be located on an inner side in the tire radial direction with respect to the outermost part of the intermediate layer 7 in a land part 2 adjacent to that circumferential groove. That is, the deepest part of the groove bottom of the circumferential groove 14 having the deepest groove depth among the plurality of the circumferential grooves 14 is located on an inner side in the tire radial direction with respect to an extension line 9 of the outermost part of the intermediate layer 7 in the land part 2 adjacent to that circumferential groove. Just under the circumferential groove 14 having the deepest groove depth among the plurality of the circumferential grooves 14 (on the inside in the tire radial direction), a recessed part recessed inside in the tire radial direction with respect to the outermost part of the intermediate layer 7 in the land part 2 adjacent to that circumferential groove, and a part of the outermost layer 6 is formed in the above-described recessed part of the intermediate layer 7 so as to have a predetermined thickness.

A distance H$_1$ between a line segment connecting ends of the tread surface and a straight line parallel to the line segment and passing through the deepest part in the circumferential groove having the deepest part is preferably 3.0 mm or more, more preferably 4.0 mm or more, further preferably 5.0 mm or more. Moreover, H$_1$ is preferably 15.0 mm or less, more preferably 12.0 mm or less, further preferably 10.0 mm or less.

A ratio of t1 to H$_1$ (t1/H$_1$) is preferably 0.20 or more, more preferably 0.25 or more, further preferably 0.30 or more, particularly preferably 0.35 or more, from the viewpoint of the effects of the present invention. On the other hand, $t1/H_1$ is preferably 0.90 or less, more preferably 0.80 or less, further preferably 0.75 or less, further preferably 0.70 or less, particularly preferably 0.65 or less.

A ratio of $E^*_T$ to $t1/H_1$ ($E^*_T/(t1/H_1)$) is preferably 6.0 or more, more preferably 7.0 or more, further preferably 8.0 or more, further preferably 10.0 or more, particularly preferably 12 or more, from the viewpoint of the effects of the present invention. On the other hand, an upper limit value of $E^*_T/(t1/H_1)$ is not particularly limited and can be, for example, 40 or less, 35 or less, 30 or less, or 25 or less.

In the present embodiment, a length of at least one land part in the width direction preferably increases gradually from the outside toward the inside in the tire radial direction. Such a configuration makes it easy to uniformly form a plurality of rubber layers on the lateral surfaces of the land parts in manufacturing the tire, so that it is considered that deterioration of noise performance at the later stage of abrasion becomes easy to be suppressed. Besides, although groove walls 7 of the circumferential grooves of the present embodiment linearly extend from the outside to the inside in the tire radial direction, they are not limited to such an aspect and may extend in, for example, curved shape or a stepped shape.

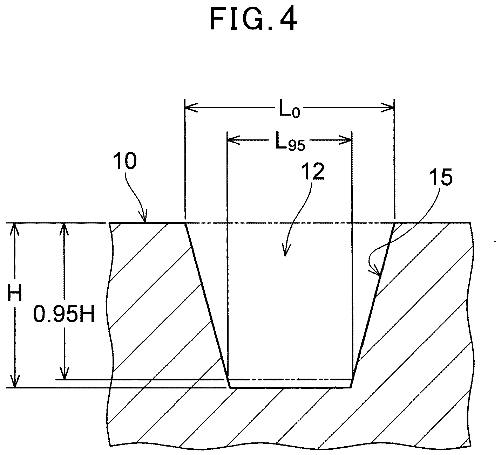

A ratio of a groove width $L_{95}$ at a 95% position of the deepest part of the groove bottom of the circumferential groove 12 to a groove width La, on the tread surface, of the circumferential groove 12 located on the outermost side when the tire is mounted to a vehicle ($L_{95}/L_0$) is preferably 0.20 or more, more preferably 0.25 or more, further preferably 0.30 or more, particularly preferably 0.35 or more, from the viewpoint of the effects of the present invention. Moreover, $L_{95}/L_0$ is preferably 0.90 or less, more preferably 0.80 or less, further preferably 0.70 or less, particularly preferably 0.60 or less. Besides, an illustration of each rubber layer is omitted in FIG. 4.

The tread part according to the present embodiment is characterized in that, when a complex elastic modulus at 30°C of the outermost layer 6 is defined as $E^*_T$, in MPa, and a complex elastic modulus at 30°C of the innermost layer 8 is defined as $E^*_B$, in MPa, $E^*_T > E^*_B$. When $E^*_T$ is greater than $E_{*B}$, a tread surface side becomes easy to selectively receive a shock at an end part of a land part after abrasion, absorbency of a shock in an inner part of the outermost layer can be easily obtained, and the intermediate layer is present. Therefore, it is considered that shock becomes less likely to propagate to the innermost layer. A difference between $E^*_T$ and $E^*_B$ ($E^*_T - E^*_B$) is preferably 1.0 MPa or more, more preferably 1.5 MPa or more, further preferably 2.0 MPa or more, particularly preferably 2.5 MPa or more, from the viewpoint of the effects of the present invention. On the other hand, an upper limit of the difference is, but not particularly limited to, preferably 20.0 MPa or less, more preferably 15.0 MPa or less, further preferably 10.0 MPa or less, particularly preferably 8.0 MPa or less. When $E^*_T - E^*_B$ is within the above-described ranges, resonance between adjacent rubber layers can be suppressed more effectively.

A 30°C $E^*$ of the outermost layer 6 ($E^*_T$) is preferably 20.0 MPa or less, more preferably 15.0 MPa or less, further preferably 10.0 MPa or less, from the viewpoint of facilitating absorption of shock. On the other hand, $E^*_T$ is preferably 3.0 MPa or more, more preferably 4.0 MPa or more, further preferably 5.0 MPa or more, particularly preferably 6.0 MPa or more.

A 30°C $E^*$ of the intermediate layer is preferably 20.0 MPa or less, more preferably 15.0 MPa or less, further preferably 10.0 MPa or less. On the other hand, 30°C $E^*$ of the intermediate layer is preferably 3.0 MPa or more, more preferably 4.0 MPa or more, further preferably 5.0 MPa or more, particularly preferably 6.0 MPa or more.

A 30°C $E^*$ of the innermost layer 8 ($E^*_B$) is preferably 2.0 MPa or more, more preferably 2.5 MPa or more, further preferably 3.0 MPa or more. On the other hand, $E^*_B$ is preferably 15.0 MPa or less, more preferably 10.0 MPa or less, further preferably 8.0 MPa or less.

Besides, the 30°C $E^*$ of each rubber layer can be appropriately adjusted depending on types and compounding amounts of rubber components, fillers, and softening agents, and the like which are described below (particularly, types and compounding amounts of softening agents).

A 30°C tan $\delta$ of the outermost layer 6 is preferably 0.40 or less, more preferably 0.35 or less, further preferably 0.30 or less, particularly preferably 0.25 or less, from the viewpoint of easily obtaining the effects of the present invention. On the other hand, the 30°C tan $\delta$ of the outermost layer 6 is preferably 0.06 or more, more preferably 0.08 or more, further preferably 0.10 or more, from the viewpoint of facilitating absorption of a shock.

A 30°C tan $\delta$ of the intermediate layer 7 is preferably 0.35 or less, more preferably 0.30 or less, further preferably 0.25 or less, particularly preferably 0.20 or less. A 30°C tan $\delta$ of the innermost layer 8 is preferably 0.30 or less, more preferably 0.25 or less, further preferably 0.20 or less, particularly preferably 0.15 or less. On the other hand, the 30°C tan $\delta$ of each of the rubber compositions constituting the intermediate layer 7 and the innermost layer 8 is preferably 0.03 or more, more preferably 0.04 or more, further preferably 0.05 or more. Besides, the 30°C tan $\delta$ of each rubber layer can be appropriately adjusted depending on types and compounding amounts of rubber components, fillers, and softening agents, and the like which are described below (particularly, types and compounding amounts of softening agents).

In the present embodiment, a glass transition temperature T, in °C, of the rubber composition constituting the outermost layer 6 is -35°C or higher, preferably -32°C or higher, more preferably -29°C or higher, further preferably -26°C or higher. When the glass transition temperature of the outermost layer 6 is within the above-described ranges, energy loss corresponding to a frequency of vibration occurring at a rolling motion during normal running can be increased, and it is considered that absorption of the vibration can be facilitated. On the other hand, an upper limit of the T is, but not particularly limited to, preferably 0°C or lower, more preferably -10°C or lower, further preferably -15°C or lower. Besides, the glass transition temperature of each rubber layer can be appropriately adjusted depending on types and compounding amounts of rubber components, and the like which are described below.

A product of t1/t2 and the absolute value of the T represented by the above-described inequality (1) ((t1/t2) × |T|) is preferably greater than 0.90, more preferably greater than 2.0, further preferably greater than 4.0, particularly preferably greater than 6.0. When (t1/t2) × |T| is within the above-described ranges, it is considered that an effect of absorbing a shock on a surface layer can be easily obtained. On the other hand, an upper limit value of (t1/t2) × ITI is, but not particularly limited to, preferably less than 70, more preferably less than 50, further preferably less than 30, particularly preferably less than 20.

[Rubber composition]

The tread part according to the present embodiment is characterized in that it consists of three or more rubber layers and that the complex elastic modulus $E^*_B$ at 30°C of the innermost layer is greater than the complex elastic modulus $E^*_T$ at 30°C of the outermost layer. Any rubber composition constituting each layer of the tread part can be produced using raw materials described below in accordance with 30°C $E^*$, 30°C tan $\delta$, and the like, as required. The description of the rubber composition according to the present embodiment will be provided below, though the description shall be applicable to any rubber layer of the tread part according to the present embodiment, unless otherwise noted.

<Rubber omponent>

In the rubber composition according to the present embodiment, a diene-based rubber is appropriately used as a rubber component. Examples of the diene-based rubber include, for example, an isoprene-based rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. These diene-based rubber components may be used alone, or two or more thereof may be used in combination.

A content of the diene-based rubber in 100% by mass of the rubber component is preferably 70% by mass or more, more preferably 80% by mass or more, further preferably 90% by mass or more, particularly preferably 95% by mass or more. Moreover, the rubber component may be one consisting only of a diene-based rubber.

The rubber composition according to the present embodiment preferably comprises, as a rubber component, at least one selected from the group consisting of an isoprene-based rubber, a styrene-butadiene rubber (SBR), and a butadiene rubber (BR). Each of rubber compositions constituting the outermost layer 6 and the intermediate layer 7 preferably comprises, as a rubber component, a SBR, more preferably comprises a SBR and a BR, or may comprise a rubber component consisting of a SBR, and a BR. On the other hand, a rubber composition constituting the innermost layer 8 preferably comprises, as a rubber component, an isoprene-based rubber, more preferably comprises an isoprene-based rubber and a BR, or may comprise a rubber component consisting of an isoprene-based rubber and a BR.

(Isoprene-based rubber)

As an isoprene-based rubber, for example, those common in the tire industry can be used, such as an isoprene rubber (IR), a natural rubber, and the like. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in each of the rubber components constituting the outermost layer 6 and the intermediate layer 7 is preferably 50% by mass or less, more preferably 40% by mass or less, further preferably 30% by mass or less, particularly preferably 20% by mass or less, from the viewpoint of wet grip performance. Moreover, a lower limit value of the content is not particularly limited and can be, for example, 1% by mass or more, 3% by mass or more, 5% by mass or more, or 10% by mass or more.

A content of the isoprene-based rubber in the rubber component constituting the innermost layer 8 is preferably 40% by mass or more, more preferably 50% by mass or more, further preferably 60% by mass or more. Moreover, an upper limit value of the content is not particularly limited.

(SBR)

The SBR is not particularly limited, examples of which include a non-modified solution-polymerized SBR (S-SBR), a non-modified emulsion-polymerized SBR (E-SBR), modified SBRs (a modified S-SBR, a modified E-SBR) thereof, and the like. Examples of the modified SBR include a SBR modified at its terminus and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated one of these SBRs (hydrogenated SBRs) and the like can also be used.

The SBRs recited above may be used alone, or two or more thereof may be used in combination. As the SBRs recited above, for example, those commercially available from Sumitomo Chemical Co., Ltd., JSR Corporation, Asahi Kasei Corporation, Zeon Corporation, ZS Elastomer Co., Ltd., etc. can be used.

The rubber component constituting the outermost layer 6 comprises a SBR having a glass transition temperature of -80°C or higher and -40°C or lower (preferably -70°C or higher and -40°C or lower, more preferably -65°C or higher and -40°C or lower, further preferably -60°C or higher and -40°C or lower, particularly preferably -60°C or higher and -45°C or lower). When such a SBR is compounded in the rubber component constituting the outermost layer 6, mobility of the rubber component is enhanced, and it is considered that a shock can be easily absorbed.

A styrene content of the SBR is preferably 10% by mass or more, more preferably 15% by mass or more, further preferably 20% by mass or more, from the viewpoints of wet grip performance and abrasion resistance. Moreover, it is preferably 60% by mass or less, more preferably 55% by mass or less, further preferably 50% by mass or less, from the viewpoints of temperature dependency of grip performance and blow resistance. Besides, the styrene content of the SBR is calculated by the above-described measuring method.

A vinyl content of the SBR is preferably 10 mol% or more, more preferably 15 mol% or more, further preferably 20 mol% or more, from the viewpoints of ensuring reactivity with silica, wet grip performance, rubber strength, and abrasion resistance. Moreover, the vinyl content of the SBR is preferably 70 mol% or less, more preferably 65 mol% or less, further preferably 60 mol% or less, from the viewpoints of prevention of increase in temperature dependence, elongation at break, and abrasion resistance. Besides, the vinyl content of the SBR is measured by the above-described measuring method.

A weight-average molecular weight (Mw) of the SBR is preferably 200,000 or more, more preferably 250,000 or more, from the viewpoint of wet grip performance. Moreover, the weight-average molecular weight is preferably 2,000,000 or less, more preferably 1,800,000 or less, further preferably 1,500,000 or less, from the viewpoint of cross-linking uniformity. Besides, the weight-average molecular weight of the SBR is measured by the above-described measuring method.

A content of the SBR having a glass transition temperature of -80°C or more and -40°C or less in the rubber component constituting the outermost layer 6 is preferably 30% by mass or more, more preferably 40% by mass or more, further preferably 50% by mass or more, particularly preferably 60% by mass or more. On the other hand, an upper limit value of the content is not particularly limited and can be, for example, 100% by mass, 99% by mass or less, 95% by mass or less, 90% by mass or less, 85% by mass or less, or 80% by mass or less.

A content of the SBR in each of the rubber components constituting the outermost layer 6 and the intermediate layer 7 (a total amount of all of a plurality of SBRs when used in combination) is preferably 30% by mass or more, more preferably 40% by mass or more, further preferably 50% by mass or more, particularly preferably 60% by mass or more. On the other hand, an upper limit value of the content is not particularly limited and can be, for example, 100% by mass, 99% by mass or less, 95% by mass or less, 90% by mass or less, 85% by mass or less, or 80% by mass or less. Besides, in the rubber composition constituting the rubber layer of the innermost layer 8, a content of the SBR in the rubber component is not particularly limited.

(BR)

The BR is not particularly limited, and those common in the tire industry can be used such as, for example, a BR having a cis content of less than 50% by mass (a low cis BR), a BR having a cis content of 90% by mass or more (a high cis BR), a rare-earth-based butadiene rubber synthesized using a rare-earth element-based catalyst (a rare-earth-based BR), a BR containing a syndiotactic polybutadiene crystal (a SPB-containing BR), a modified BR (a high cis modified BR, a low cis modified BR), and the like. These BRs may be used alone, or two or more thereof may be used in combination.

As the high cis BR, for example, those commercially available form Zeon Corporation, Ube Industries, Ltd., JSR Corporation, etc. can be used. When the high cis BR is compounded, low temperature characteristics and abrasion resistance can be improved. A cis content of the high cis BR is preferably 95% by mass or more, more preferably 96% by mass or more, further preferably 97% by mass or more. Besides, the cis content of the BR is measured by the above-described measuring method.

As the modified BR, a modified butadiene rubber (modified BR) is appropriately used which is modified by a functional group whose terminal and/or main chain comprises at least one element selected from the group consisting of silicon, nitrogen, and oxygen.

Examples of other modified BRs include those obtained by adding a tin compound after polymerizing 1,3-butadiene by a lithium initiator, the terminals of which are further bonded by tin-carbon bond (tin-modified BRs), and the like. Moreover, the modified BRs may be hydrogenated or non-hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR is measured by the above-described measuring method.

A content of the BR in each of the rubber components constituting the outermost layer 6 and the intermediate layer 7 is preferably 60% by mass or less, more preferably 50% by mass or less, further preferably 40% by mass or less, particularly preferably 30% by mass or less, from the viewpoint of wet grip performance. Moreover, a lower limit value of the content is not particularly limited and can be, for example, 1% by mass or more, 3% by mass or more, 5% by mass or more, or 10% by mass or more.

A content of the BR in the rubber component constituting the innermost layer 8 is preferably 60% by mass or less, more preferably 50% by mass or less, further preferably 40% by mass or less. Moreover, a lower limit value of the content is not particularly limited and can be, for example, 1% by mass or more, 3% by mass or more, 5% by mass or more, or 10% by mass or more.

(Other rubber components)

The rubber component may comprise rubber components other than the diene-based rubbers as long as they do not affect the effects of the present invention. As the other rubber components, cross-linkable rubber components commonly used in the tire industry can be used, examples of which include, for example, a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

<Filler>

A filler comprising carbon black and/or silica is appropriately used for the rubber composition according to the present embodiment. Each of the rubber compositions constituting the outermost layer 6 and the intermediate layer 7 preferably comprises, as a filler, silica, more preferably comprises carbon black and silica. The rubber composition constituting the innermost layer 8 preferably comprises carbon black as a filler.

(Carbon black)

Carbon black is not particularly limited, and those common in the tire industry can be used, such as, for example, GPF, FEF, HAF, ISAF, SAF, and the like. Besides, in addition to carbon black generated by burning general mineral oil, carbon black, for which a biomass material such as lignin and the like is used, may be used. These carbon black may be used alone, or two or more thereof may be used in combination.

A nitrogen adsorption specific surface area ($N_2SA$) of the carbon black is preferably 50 $m^2/g$ or more, more preferably 80 $m^2/g$ or more, further preferably 110 $m^2/g$ or more, from the viewpoint of facilitating absorption of shock by energy loss caused by interaction with the rubber component. Moreover, it is preferably 200 $m^2/g$ or less, more preferably 180 $m^2/g$ or less, further preferably 160 $m^2/g$ or less, from the viewpoints of fuel efficiency and processability. Besides, the $N_2SA$ of the carbon black is measured by the above-described measuring method.

A content of the carbon black based on 100 parts by mass of the rubber component in each of the rubber compositions constituting the outermost layer 6 and the intermediate layer 7 is preferably 1 part by mass or more, more preferably 3 parts by mass or more, further preferably 5 parts by mass or more, from the viewpoints of abrasion resistance and wet grip performance. Moreover, it is preferably 50 parts by mass or less, more preferably 35 parts by mass or less, further preferably 20 parts by mass or less, particularly preferably 10 parts by mass or less, from the viewpoint of fuel efficiency.

A content of the carbon black based on 100 parts by mass of the rubber component in the rubber composition constituting the innermost layer 8 is preferably 20 parts by mass or more, more preferably 25 parts by mass or more, further preferably 30 parts by mass or more. Moreover, the content is preferably 100 parts by mass or less, more preferably 80 parts by mass or less, further preferably 60 parts by mass or less.

(Silica)

Silica is not particularly limited, and those common in the tire industry can be used, such as, for example, silica prepared by a dry process (anhydrous silica), silica prepared by a wet process (hydrous silica), and the like. Among them, hydrous silica prepared by a wet process is preferable for the reason that it has many silanol groups. Besides, in addition to the above-described silica, silica made from a biomass material such as rice husks and the like may be appropriately used. These silica may be used alone, or two or more thereof may be used in combination.

A nitrogen adsorption specific surface area ($N_2SA$) of the silica is preferably 120 $m^2/g$ or more, more preferably 140 $m^2/g$ or more, further preferably 160 $m^2/g$ or more, particularly preferably 180 $m^2/g$ or more, from the viewpoint of facilitating absorption of shock by energy loss. On the other hand, it is preferably 350 $m^2/g$ or less, more preferably 300 $m^2/g$ or less, further preferably 250 $m^2/g$ or less, from the viewpoint of dispersibility. Besides, the $N_2SA$ of the silica is measured by the above-described measuring method.

An average primary particle size of the silica is preferably 22 nm or less, more preferably 20 nm or less, further preferably 18 nm or less, further preferably 17 nm or less, particularly preferably 16 nm or less, from the viewpoint of facilitating absorption of shock by energy loss. On the other hand, it is preferably 1 nm or more, more preferably 3 nm or more, further preferably 5 nm or more, from the viewpoint of dispersibility. Besides, the average primary particle size of the silica is measured by the above-described measuring method.

A content of the silica based on 100 parts by mass of the rubber component in each of the rubber compositions constituting the outermost layer 6 and the intermediate layer 7 is preferably 50 parts by mass or more, more preferably 70 parts by mass or more, further preferably 85 parts by mass or more, further preferably 95 parts by mass or more, particularly preferably 105 parts by mass or more, from the viewpoint of making it easy to obtain energy loss. Moreover, it is preferably 150 parts by mass or less, more preferably 140 parts by mass or less, further preferably 130 parts by mass or less, from the viewpoint of abrasion resistance. Besides, a content of the silica based on 100 parts by mass of the rubber component in the rubber composition constituting the innermost layer 8 is not particularly limited.

A total content of the silica and the carbon black based on 100 parts by mass of the rubber component in each of the rubber compositions constituting the outermost layer 6 and the intermediate layer 7 is preferably 55 parts by mass or more, more preferably 75 parts by mass or more, further preferably 90 parts by mass or more, further preferably 100 parts by mass or more, particularly preferably 110 parts by mass or more, from the viewpoint of abrasion resistance. Moreover, it is preferably 160 parts by mass or less, more preferably 150 parts by mass or less, further preferably 140 parts by mass or less, from the viewpoints of fuel efficiency and elongation at break.

A content of the silica in 100% by mass of the filler in each of the rubber compositions constituting the outermost layer 6 and the intermediate layer 7 is preferably 50% by mass or more, more preferably 60% by mass or more, further preferably 70% by mass or more, further preferably 80% by mass or more, further preferably 85% by mass or more, particularly preferably 90% by mass or more.

(Other fillers)

As a filler, in addition to the carbon black and silica, other fillers may be further used. Such fillers are not particularly limited, and those conventionally and commonly used in the tire industry can be compounded, such as, for example, aluminum hydroxide, alumina (aluminum oxide), calcium carbonate, magnesium sulfate, talc, clay, biochar, and the like. These other fillers may be used alone, or two or more thereof may be used in combination.

(Silane coupling agent)

Silica is preferably used in combination with a silane coupling agent. The silane coupling agent is not particularly limited, and any silane coupling agents conventionally used in combination with silica in the tire industry can be used, such as, for example, a mercapto-based silane coupling agent such as 3-mercaptopropyltrimethoxysilane, 3-mercaptopropyltriethoxysilane, 2-mercaptoethyltrimethoxysilane, 2-mercaptoethyltriethoxysilane, and the like; a sulfide-based silane coupling agent such as bis(3-triethoxysilylpropyl)disulfide bis(3-triethoxysilylpropyl)tetrasulfide, and the like; a thioester-based silane coupling agent such as 3-octanoylthio-1-propyltriethoxysilane, 3-hexanoylthio-1-propyltriethoxysilane, 3-octanoylthio-1-propyltrimethoxysilane, and the like; a vinyl-based silane coupling agent such as vinyltriethoxysilane, vinyltrimethoxysilane, and the like; an amino-based silane coupling agent such as 3-aminopropyltriethoxysilane, 3-aminopropyltrimethoxysilane, 3-(2-aminoethyl)aminopropyltriethoxysilane, and the like; a glycidoxy-based silane coupling agent such as γ-glycidoxypropyltriethoxysilane, γ-glycidoxypropyltrimethoxysilane, and the like; a nitro-based silane coupling agent such as 3-nitropropyltrimethoxysilane, 3-nitropropyltriethoxysilane, and the like; a chloro-based silane coupling agent such as 3-chloropropyltrimethoxysilane, 3-chloropropyltriethoxysilane, and the like; etc. Among them, the rubber composition preferably comprises a sulfide-based silane coupling agent and/or a mercapto-based silane coupling agent. As the silane coupling agents, for example, those commercially available from Evonik Degussa GmbH, Momentive Performance Materials, etc. can be used. These silane coupling agents may be used alone, or two or more thereof may be used in combination.

A content of the silane coupling agent when compounded based on 100 parts by mass of the rubber component is preferably 0.5 parts by mass or more, more preferably 1.0 part by mass or more, further preferably 2.0 parts by mass or more, particularly preferably 4.0 parts by mass or more, from the viewpoint of improvement in dispersibility of silica. Moreover, it is preferably 20 parts by mass or less, more preferably 15 parts by mass or less, further preferably 12 parts by mass or less, from the viewpoint of preventing deterioration of abrasion resistance.

A content of the silane coupling agent based on 100 parts by mass of the silica is preferably 1.0 part by mass or more, more preferably 3.0 parts by mass or more, further preferably 5.0 parts by mass or more, from the viewpoint of improvement in dispersibility of silica. Moreover, it is preferably 20 parts by mass or less, more preferably 15 parts by mass or less, further preferably 12 parts by mass or less, from the viewpoints of cost and processability.

<Other compounding agents>

The rubber composition according to the present embodiment can appropriately comprise compounding agents conventionally and commonly used in the tire industry, such as, for example, softening agent, wax, processing aid, stearic acid, zinc oxide, an antioxidant, a vulcanizing agent, a vulcanization accelerator, and the like, in addition to the above-described components.

(Softening agent)

The rubber composition according to the present embodiment preferably comprises a softening agent. Examples of the softening agent include, for example, a resin component, oil, a liquid rubber, and the like. The rubber composition constituting the outermost layer 6 preferably comprises a resin component.

Examples of the resin component include, but not particularly limited to, a petroleum resin, a terpene-based resin, a rosin-based resin, a phenol-based resin, and the like which are commonly used in the tire industry, and may be one obtained by hydrogenating them. These resin components may be used alone, or two or more thereof may be used in combination.

Examples of the petroleum resin include a C5-based petroleum resin, an aromatic petroleum resin, a C5-C9-based petroleum resin, and the like.

In the present specification, a "C5-based petroleum resin" means a resin obtained by polymerizing C5 fractions. Examples of C5 fractions include, for example, petroleum fractions having 4 to 5 carbon atoms, such as cyclopentadiene, pentene, pentadiene, isoprene, and the like. A cyclopentadiene-based resin is appropriately used as a C5-based petroleum resin. Examples of the cyclopentadiene-based resin include a dicyclopentadiene resin (DCPD resin), a cyclopentadiene resin, a methylcyclopentadiene resin, and resins obtained by hydrogenating these cyclopentadiene-based resins (hydrogenated cyclopentadiene-based resins). As the cyclopentadiene-based resin, for example, those commercially available from Exxon Mobil Chemical, etc. can be used.

In the present specification, an "aromatic petroleum resin" means a resin obtained by polymerizing C9 fractions and may be those undergoing hydrogeneration or modification. Examples of the C9 fractions include, for example, a petroleum fraction having 8 to 10 carbon atoms, such as vinyltoluene, alkylstyrene, indene, methylindene, and the like. As specific examples of the aromatic petroleum resin, for example, a coumarone-indene resin, a coumarone resin, an indene resin, and an aromatic vinyl-based resin are appropriately used.

As the aromatic vinyl-based resin, a homopolymer of an $\alpha$-methylstyrene derivative or a styrene derivative or a copolymer of an $\alpha$-methylstyrene derivative and a styrene derivative and /or indene is preferable, because it is economical, easy to process, and excellent in thermogenetic property. Besides, the above-described "$\alpha$-methylstyrene derivative" means an $\alpha$-methylstyrene compound even if its benzene ring is subjected to substitution (preferably an $\alpha$-methylstyrene compound in which a saturated hydrocarbon group having 1 to 4 carbon atoms may be substituted for a group located on its benzene ring, more preferably $\alpha$-methylstyrene), and the above-described "styrene derivative" means a styrene compound even if its benzene ring is subjected to substitution (preferably a styrene compound in which a saturated hydrocarbon group having 1 to 4 carbon atoms may be substituted for a group located on its benzene ring, more preferably styrene). As the aromatic vinyl-based resin, for example, those commercially available from Mitsui Chemicals, Inc., Kraton Corporation, Eastman Chemical Company, etc. can be used.

In the present specification, a "C5-C9-based petroleum resin" means a resin obtained by polymerizing the C5 fractions and the C9 fractions and may be those undergoing hydrogeneration or modification. Examples of C5 fractions and C9 fractions include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resin include a polyterpene resin consisting of at least one selected from terpene compounds such as $\alpha$-pinene, $\beta$-pinene, limonene, dipentene, and the like; an aromatic modified terpene resin made from a terpene compound described above and an aromatic compound; a terpene phenol resin made from a terpene compound described above and a phenol-based compound; and resins obtained by hydrogenating these types of terpene-based resins (hydrogenated terpene-based resins). Examples of the aromatic compound from which the aromatic modified terpene resin is made include, for example, styrene, $\alpha$-methylstyrene, vinyltoluene, divinyltoluene, and the like. Examples of the phenol-based compound from which the terpene phenol resin is made include, for example, phenol, bisphenol A, cresol, xylenol, and the like. As the terpene-based resin, for example, those commercially available from YASUHARA CHEMICAL CO., LTD., etc. can be used.

Examples of the rosin-based resin include, but not particularly limited to, for example, a natural resin rosin, a modified rosin resin, and the like. As the rosin-based resin, for example, those commercially available from Arakawa Chemical Industries, Ltd., Harima Chemicals, Inc., etc. can be used.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

The resin component is preferably one or more resins selected from the group consisting of petroleum resins and terpene-based resins, more preferably one or more resins selected from the group consisting of cyclopentadiene-based resins, aromatic vinyl-based resins, and terpene-based resins.

A content of the resin component when compounded based on 100 parts by mass of the rubber component is preferably 1 part by mass or more, more preferably 3 parts by mass or more, further preferably 5 parts by mass or more. Moreover, the content of the resin component is preferably 60 parts by mass or less, more preferably 50 parts by mass or less, further preferably 40 parts by mass or less, particularly preferably 30 parts by mass or less.

Examples of the oil include, for example, process oils, vegetable oils and fats, animal oils and fats, and the like. Examples of the process oils include paraffinic process oils (mineral oils), naphthenic process oils, aromatic process oils, and the like. Specific examples of the process oils include, for example, MES (Mild Extract Solvated), DAE (Distillate Aromatic Extract), TDAE (Treated Distillate Aromatic Extract), TRAE (Treated Residual Aromatic Extract), RAE (Residual Aromatic Extract), and the like. Moreover, a process oil having a low content of a polycyclic aromatic compound (PCA) can also be used for environmental measures. Examples of the process oil having a low PCA content include MES, TDAE, a heavy naphthenic oil, and the like. Moreover, from the viewpoint of a life cycle assessment, one obtained by refining a waste oil after use for a rubber mixing machine or an engine or waste cooking oil used in a cooking facility may be used.

A content of the oil when compounded based on 100 parts by mass of the rubber component is preferably 1 part by mass or more, more preferably 3 parts by mass or more, further preferably 6 parts by mass or more, particularly preferably 9 parts by mass or more, from the viewpoint of processability. Moreover, it is preferably 120 parts by mass or less, more preferably 100 parts by mass or less, further preferably 80 parts by mass or less, from the viewpoint of abrasion resistance.

The liquid rubber is not particularly limited as long as it is a polymer in a liquid state at a normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. These liquid rubbers may be used alone, or two or more thereof may be used in combination.

A content of the liquid rubber when compounded based on 100 parts by mass of the rubber component is preferably 1 part by mass or more, more preferably 2 parts by mass or more, further preferably 3 parts by mass or more, particularly preferably 5 parts by mass or more. Moreover, the content of the liquid rubber is preferably 40 parts by mass or less, more preferably 30 parts by mass or less, further preferably 20 parts by mass or less.

A content of the softening agent based on 100 parts by mass of the rubber component in each of the rubber compositions constituting the outermost layer 6 and the intermediate layer 7 (a total amount of all of a plurality of softening agents when used in combination) is preferably 5 parts by mass or more, more preferably 10 parts by mass or more, further preferably 15 parts by mass or more, further preferably 18 parts by mass or more, particularly preferably 25 parts by mass or more. Moreover, the content is preferably 100 parts by mass or less, more preferably 90 parts by mass or less, further preferably 80 parts by mass or less, particularly preferably 70 parts by mass or less.

A content of the resin component in the softening agent in the rubber composition constituting the outermost layer 6 is preferably 30% by mass or more, more preferably 40% by mass or more, further preferably 50% by mass or more, from the viewpoint of making it easy to obtain energy loss by interaction with a styrene part in the rubber component. On the other hand, an upper limit value of the content of the resin component in the softening agent in the rubber composition constituting the outermost layer 6 is, but not particularly limited to, preferably 99% by mass or less, more preferably 90% by mass or less, further preferably 85% by mass or less, particularly preferably 80% by mass or less.

A total content of the silica and the softening agent based on 100 parts by mass of the rubber component in the rubber composition constituting the outermost layer 6 is preferably 80 parts by mass or more, more preferably 90 parts by mass or more, further preferably 100 parts by mass or more, further preferably 110 parts by mass or more, further preferably 114 parts by mass or more, particularly preferably 120 parts by mass or more, from the viewpoint of enhancing energy loss of the rubber composition to facilitate absorption of shock. On the other hand, it is preferably 180 parts by mass or less, more preferably 170 parts by mass or less, further preferably 160 parts by mass or less, from the viewpoint of abrasion resistance.

A content of the softening agent based on 100 parts by mass of the rubber component in the rubber composition constituting the innermost layer 8 (a total amount of all of a plurality of softening agents when used in combination) is preferably 30 parts by mass or less, more preferably 25 parts by mass or less, further preferably 20 parts by mass or less, particularly preferably 15 parts by mass or less. On the other hand, a lower limit value of the content can be, but not particularly limited to, for example, 1 part by mass or more, 3 parts by mass or more, or 5 parts by mass or more.

The wax is not particularly limited, and any of those commonly used in the tire industry can be appropriately used, examples of which include, for example, a petroleum-based wax, a mineral-based wax, a synthetic wax, and the like. The petroleum-based wax is preferable. Examples of the petroleum-based wax include, for example, a paraffin wax, a microcrystalline wax, a selected special wax thereof, and the like. The paraffin wax is preferable. Besides, the wax according to the present embodiment shall not include stearic acid. As a wax, for example, those commercially available from Ouchi Shinko Chemical Industry Co., Nippon Seiro Co., Ltd., PARAMELT, etc. can be used. These waxes may be used alone, or two or more thereof may be used in combination.

A content of the wax when compounded based on 100 parts by mass of the rubber component is preferably 0.5 parts by mass or more, more preferably 1.0 part by mass or more, further preferably 1.5 parts by mass or more, from the viewpoint of weather resistance of a rubber. Moreover, it is preferably 10 parts by mass or less, more preferably 5.0 parts by mass or less, from the viewpoint of preventing whitening of a tire due to bloom.

Examples of the processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. These processing aid may be used alone, or two or more thereof may be used in combination. As processing aid, for example, those commercially available from Schill+Seilacher GmbH, Performance Additives, etc. can be used.

A content of the processing aid when compounded based on 100 parts by mass of the rubber component is preferably 0.5 parts by mass or more, more preferably 1.0 part by mass or more, further preferably 1.5 parts by mass or more, from the viewpoint of exhibiting an effect of improving processability. Moreover, it is preferably 10 parts by mass or less, more preferably 8.0 parts by mass or less, from the viewpoints of abrasion resistance and breaking strength.

Examples of the antioxidant include, but not particularly limited to, for example, amine-based, quinoline-based, quinone-based, phenol-based, and imidazole-based compounds, and antioxidants such as a carbamic acid metal salt and the like, preferably phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like; and quinoline-based antioxidants such as 2,2,4-trimethyl-1,2-dihydroquinoline polymer, 6-ethoxy-2,2,4-trimethyl-1,2-dihydroquinoline, and the like. These antioxidants may be used alone, or two or more thereof may be used in combination.

A content of the antioxidant when compounded based on 100 parts by mass of the rubber component is preferably 0.5 parts by mass or more, more preferably 1.0 part by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of the stearic acid when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of the zinc oxide when compounded based on 100 parts by mass of the rubber component is preferably 0.5 parts by mass or more, more preferably 1.0 part by mass or more, further preferably 1.5 part by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as the vulcanizing agent based on 100 parts by mass of the rubber component is preferably 0.1 parts by mass or more, more preferably 0.3 part by mass or more, further preferably 0.5 part by mass or more, from the viewpoint of securing a sufficient vulcanization reaction. Moreover, it is preferably 5.0 parts by mass or less, more preferably 4.0 parts by mass or less, further preferably 3.0 parts by mass or less, further preferably 2.5 parts by mass or less, from the viewpoint of prevention of deterioration. Besides, a content of the vulcanizing agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyl dithio)hexane, and the like. As these vulcanizing agents other than sulfur, those commercially available from Taoka Chemical Co., Ltd., LANXESS, Flexsys, etc. can be used.

Examples of the vulcanization accelerator include, for example, a sulfenamide-based vulcanization accelerator, a thiazole-based vulcanization accelerator, a thiuram-based vulcanization accelerator, a guanidine-based vulcanization accelerator, a dithiocarbamic acid salt-based vulcanization accelerator, caprolactam disulfide, and the like. These vulcanization accelerators may be used alone, or two or more thereof may be used in combination. Among them, from the viewpoint that the desired effects can be more appropriately obtained, one or more vulcanization accelerators selected from the group consisting of the sulfenamide-based vulcanization accelerator, the thiazole-based vulcanization accelerator, and the guanidine-based vulcanization accelerator are preferable.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, the TBBS and CBS are preferable.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl) mercaptobenzothiazole, 2-(2,6-diethyl-4-morpholinothio) benzothiazole, and the like. Among them, the MBTS and MBT are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenyl guanidine, 1,3-di-o-biphenyl guanidine, 1,3-di-o-cumenyl-2-propionyl guanidine, and the like. Among them, the DPG is preferable.

A content of the vulcanization accelerator when compounded based on 100 parts by mass of the rubber component (a total amount of all of a plurality of vulcanization agents when used in combination) is preferably 1.0 part by mass or more, more preferably 1.2 parts by mass or more, further preferably 1.5 parts by mass or more. Moreover, the content is preferably 8.0 parts by mass or less, more preferably 7.0 parts by mass or less, further preferably 6.0 parts by mass or less. When the content of the vulcanization accelerator is within the above-described ranges, breaking strength and elongation tend to be secured.

[Production of rubber composition and tire]

The rubber composition according to the present embodiment can be produced by a known method. For example, it can be produced by kneading the respective above-described components with a rubber kneading machine such as an open roll, a sealed type kneader (a Banbury mixer, a kneader, and the like), and the like.

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes.

The tire comprising the tread that comprises the outermost layer 6 and the intermediate layer 7 can be produced with the respective corresponding rubber compositions thereto by a usual method. That is, the tire can be produced by extruding each unvulcanized rubber composition, which corresponds to each rubber layer obtained by the above-described method, into a shape of each rubber layer with an extruder equipped with a mouthpiece having a predetermined shape, attaching an extruded unvulcanized tread together with other tire members on a tire forming machine to form an unvulcanized tire by a usual molding method, followed by heating and pressurizing this unvulcanized tire in a vulcanizing machine. Examples of vulcanization conditions include, but not particularly limited to, for example, a method of vulcanizing at a temperature of 150°C to 200°C for 10 minutes to 30 minutes.

[Application of tire]

The tire according to the present embodiment can be appropriately used as a tire for a passenger car, a tire for a truck/bus, a motorcycle tire, or a racing tire, and among them, the tire is preferably used as a tire for a passenger car. Besides, the tire for a passenger car refers to a tire that is presupposed to be mounted to a vehicle running with four wheels and that has a maximum load capacity of 1000 kg or less. Moreover, the tire according to the present embodiment can be used as an all-season tire, a summer tire, or a winter tire such as a studless tire and the like.

EXAMPLE

Hereinafter, examples considered to be preferable in implementing the present invention (Examples) will be described, though the scope of the present invention is not limited to these Examples only. A tire is studied which comprises an outermost layer, a first intermediate layer, a second intermediate layer, and an innermost layer of a tread part obtained using various chemicals described below in accordance with compounding formulations of Table 1, and results calculated based on evaluation methods described below are shown in Tables 2 and 3.

<Production of rubber composition and tire>

Various chemicals used in Examples and Comparative examples are collectively shown below.

NR: TSR20
SBR1: EUROPRENE (Registered Trademark) SOL R C2525 manufactured by VERSALIS (Tg: -50°C, styrene content: 26% by mass, vinyl content: 24 mol%, Mw: 600,000, a non-oil-extended product)
SBR2: Nipol NS522 manufactured by ZS Elastomer Co., Ltd. (S-SBR, Tg: -25°C, styrene content: 39% by mass, vinyl content: 40 mol%, Mw: 1,200,000, comprising 37.5 parts by mass of an extending oil content based on 100 parts by mass of a rubber solid content)
BR: Ubepol BR (Registered Trademark) 150B manufactured by Ube Industries, Ltd. (cis content: 97 mol%, Mw: 440,000)
Silica 1: Ultrasil VN3 manufactured by Evonik Degussa GmbH ($N_2SA$: 175 m$^2$/g, average primary particle size: 17 nm)
Silica 2: ZEOSIL PREMIUM 200MP manufactured by Rhodia Japan K. K. ($N_2SA$: 220 m$^2$/g, average primary particle size: 15 nm)
Carbon black: Seast 9 manufactured by Tokai Carbon Co., Ltd., (SAF, $N_2SA$: 142 m$^2$/g)
Silane coupling agent: Si226 manufactured by Evonik Degussa GmbH (bis(3-triethoxysilylpropyl)disulfide)
Oil: VivaTec 400 manufactured by H&R Group (TDAE oil)
Resin component 1: Sylvatraxx 4401 manufactured by Kraton Corporation (copolymer of $\alpha$-methylstyrene and styrene)
Resin component 2: Oppera PR-120 manufactured by Exxon Mobil Chemical (hydrogenated dicyclopentadiene resin)
Liquid rubber: RICON 100 manufactured by Cray Valley (liquid SBR)
Zinc oxide: Zinc oxide No. 1 manufactured by Mitsui Mining & Smelting Co., Ltd.
Antioxidant: Antigen 6C manufactured by Sumitomo Chemical Co., Ltd. (N-(1,3-dimethylbutyl)-N'-phenyl-p-phenylenediamine)
Stearic acid: Bead stearic acid "CAMELLIA" manufactured by NOF CORPORATION
Wax: OZOACE 0355 manufactured by Nippon Seiro Co., Ltd. (paraffin wax)
Sulfur: HK-200-5 manufactured by Hosoi Chemical Industry Co., Ltd. (5% oil-containing powdered sulfur)
Vulcanization accelerator 1: Nocceler CZ manufactured by Ouchi Shinko Chemical Industry Co., Ltd. (N-cyclohexyl-2-benzothiazolylsulfenamide (CBS))
Vulcanization accelerator 2: Nocceler D manufactured by Ouchi Shinko Chemical Industry Co., Ltd. (1,3-diphenylguanidine (DPG))

<Production of low-density member>

(Low-density member 1 (noise suppressing body))

As a noise suppressing body 39, a polyurethane-based sponge is used which includes an ether-based polyurethane sponge having a shape shown in FIG. 1. The noise suppressing body has a volume equal to 15% of the total volume of the tire lumen, a density of $2.7 \times 10^{-2}$ g/cm$^3$, and a Tg of-50°C.

(Examples and Comparative examples)

According to the compounding formulations shown in Table 1, using a 1.7 L closed Banbury mixer, all chemicals other than sulfur and a vulcanization accelerator are kneaded for 1 to 10 minutes until the temperature reaches a discharge temperature of 150°C to 160°C, to obtain a kneaded product. Next, using a twin-screw open roll, the sulfur and vulcanization accelerator are added to the kneaded product, and the mixture is kneaded for 4 minutes until the temperature reaches 105°C, to obtain an unvulcanized rubber composition. The unvulcanized rubber composition is molded into shapes of an outermost layer, an intermediate layer, and an innermost layer of a tread part and attached together with other tire members to produce an unvulcanized tire, and the unvulcanized tire is vulcanized at 170°C, thereby obtaining each test tire listed in Tables 2 and 3 (size: 205/55R16, rim: 16×6.5J). Besides, a thickness t3 of the innermost layer is set to 2.0 mm, a thickness of each of a first intermediate layer and a second intermediate layer of Example 12 is set to 2.5 mm, and a groove depth $H_1$ of a deepest part of a circumferential groove is set to 7.0 mm.

<Measurement of loss tangent tan $\delta$, complex elastic modulus E*, and glass transition temperature (Tg)>

For each vulcanized rubber test piece prepared by being cut out from an inner part of each rubber layer of a tread part of each test tire to have a length of 20 mm, a width of 4 mm, and a thickness of 1 mm such that a tire circumferential direction becomes a long-side and a tire radial direction becomes a thickness direction, a loss tangent tan $\delta$ and a complex elastic modulus E* are measured using a dynamic viscoelasticity measuring device (EPLEXOR Series manufactured by gabo Systemtechnik GmbH) under a condition of a temperature at 30°C, a frequency of 10 Hz, an initial strain of 5%, a dynamic strain of $\pm 1\%$, and an extension mode. Moreover, a temperature distribution curve of the tan $\delta$ in a range of -60°C to 40°C is measured under a condition of a frequency of 10Hz, an initial strain of 10%, an amplitude of $\pm 0.5\%$, and a temperature rising rate of 2°C/min, and a temperature corresponding to the largest value of the tan $\delta$ in the obtained temperature distribution curve (tang $\delta$ peak temperature) is defined as a glass transition temperature (Tg).

<Noise deterioration-suppressing performance>

Each of test tires in mint condition and each of test tires after abrasion are mounted on four wheels of an FF passenger vehicle with a displacement of 2000 cc, and the FF passenger vehicle is made run on a test course with a dry asphalt road surface. Noises felt by test drivers inside the FF passenger vehicle running at 120 km/hour are evaluated based on each feeling. The evaluations are performed on a scale of one to ten of integer values, and a total score of scores given by ten test drivers is calculated under evaluation criteria in which that the higher the score is, the better the nose performance is. For each test tire, according to the following equations, a rate of change in score of noise performance before and after abrasion is calculated, a rate of change for a control tire (Comparative example 8) is converted into 100, and a noise deterioration suppression index of each test tire after abrasion is determined. The results show that the larger the index is, the less the change in noise performance before and after abrasion is, indicating that noise deterioration-suppressing performance is good, (Rate of change in noise for control tire) = (Score of noise --> performance of control tire after abrasion)/(Score of noise performance of control tire in mint condition), +(Rate of change in noise for each test tire) = (Score of noise performance of each test tire after abrasion)/(Score of noise performance of each test tire in mint condition), (Noise deterioration suppression index of each test tire) = (Rate of change in noise for each test tire)/(Rate of change in noise for control tire) $\times$ 100.

Besides, after a tread part is abraded along a tread radius such that a depth of a circumferential groove of a tire in mint condition having the deepest depth becomes 50% of its depth in mint condition, this tire is thermally deteriorated at 80°C for 7 days, thereby preparing each test tire after abrasion. In each test tire after abrasion, an intermediate layer is exposed and forms a tread surface.

Table 1

| | Rubber layer | | | | | | | | | |
|---|---|---|---|---|---|---|---|---|---|---|
| | A | B | C | D | E | F | G | H | I | J |
| Compounding amount (part by mass) | | | | | | | | | | |
| NR | 10 | - | 10 | - | - | - | - | - | - | - |
| SBR 1 | 40 | 95 | 80 | 60 | 60 | 60 | 60 | 60 | 60 | 60 |
| SBR 2 | 41.25 | - | - | 41.25 | 41.25 | 41.25 | 41.25 | 41.25 | 41.25 | 41.25 |
| (Rubber solid content) | (30) | | | (30) | (30) | (30) | (30) | (30) | (30) | (30) |
| BR | 20 | 5 | 10 | 10 | 10 | 10 | 10 | 10 | 10 | 10 |
| Silica 1 | 95 | 95 | 95 | 95 | 95 | 95 | - | - | - | - |
| Silica 2 | - | - | - | - | - | - | 95 | 110 | 110 | 110 |
| Carbon black | 5 | 5 | 5 | 5 | 5 | 5 | 5 | 5 | 5 | 5 |
| Silane coupling agent | 7.6 | 7.6 | 7.6 | 7.6 | 7.6 | 7.6 | 7.6 | 8.8 | 8.8 | 8.8 |
| Oil | 0.75 | 12.0 | 12.0 | 0.75 | 2.55 | 0.75 | 0.75 | 10.75 | 10.75 | 0.75 |

(continued)

| | Rubber layer | | | | | | | | | |
|---|---|---|---|---|---|---|---|---|---|---|
| | A | B | C | D | E | F | G | H | I | J |
| **Compounding amount (part by mass)** | | | | | | | | | | |
| Resin component 1 | 9.0 | 9.0 | 9.0 | 9.0 | 7.2 | 9.0 | 9.0 | 30 | - | 30 |
| Resin component 2 | - | - | - | - | - | - | - | - | 30 | - |
| Liquid rubber | - | - | - | - | - | - | - | - | - | 10 |
| Zinc oxide | 2.0 | 2.0 | 2.0 | 2.0 | 2.0 | 2.0 | 2.0 | 2.0 | 2.0 | 2.0 |
| Antioxidant | 1.0 | 1.0 | 1.0 | 1.0 | 1.0 | 1.0 | 1.0 | 1.0 | 1.0 | 1.0 |
| Stearic acid | 2.0 | 2.0 | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 2.0 | 2.0 | 2.0 |
| Sulfur | 1.0 | 1.0 | 1.0 | 1.0 | 1.0 | 1.0 | 1.0 | 1.0 | 1.0 | 1.0 |
| Vulcanization accelerator 1 | 1.0 | 1.0 | 1.0 | 1.0 | 1.0 | 1.0 | 1.0 | 1.0 | 1.0 | 1.0 |

| | Rubber layer | | | | | | | | | |
|---|---|---|---|---|---|---|---|---|---|---|
| | A | B | C | D | E | F | G | H | I | J |
| **Compounding amount (part by mass)** | | | | | | | | | | |
| Vulcanization accelerator 2 | 0.5 | 0.5 | 0.5 | 0.5 | 0.5 | 0.5 | 0.5 | 0.5 | 0.5 | 0.5 |
| **Physical properties** | | | | | | | | | | |
| Tg (°C) | -23 | -23 | -23 | -22 | -25 | -23 | -23 | -23 | -26 | -18 |
| 30°C E$_*$ (MPa) | 6.5 | 6.6 | 6.7 | 6.5 | 6.6 | 7.0 | 7.0 | 7.0 | 7.0 | 7.3 |
| 30°C tan $\delta$ | 0.21 | 0.21 | 0.21 | 0.21 | 0.20 | 0.24 | 0.24 | 0.24 | 0.22 | 0.26 |

| | Rubber layer | | | | | | | | |
|---|---|---|---|---|---|---|---|---|---|
| | K | L | M | N | O | P | Q | R | S |
| **Compounding amount (part by mass)** | | | | | | | | | |
| NR | - | - | - | - | - | - | 20 | 70 | 70 |
| SBR 1 | 60 | 60 | - | 60 | 60 | - | - | - | - |
| SBR 2 | 41.25 | 41.25 | 82.5 | 41.25 | 41.25 | 82.5 | 82.5 | - | - |
| (Rubber solid content) | (30) | (30) | (60) | (30) | (30) | (60) | (60) | | |
| BR | 10 | 10 | 40 | 10 | 10 | 40 | 20 | 30 | 30 |
| Silica 1 | 110 | 110 | 110 | - | - | - | 70 | - | - |
| Silica 2 | - | - | - | 110 | 110 | 110 | - | - | - |
| Carbon black | 5 | 5 | 5 | 5 | 5 | 5 | 5 | 40 | 80 |
| Silane coupling agent | 8.8 | 8.8 | 8.8 | 8.8 | 8.8 | 8.8 | 5.6 | - | - |
| Oil | 20.75 | 40.75 | 15.5 | 15.75 | 40.75 | 9.5 | 0.5 | - | - |
| Resin component 1 | 20 | - | 24 | 25 | - | 30 | - | 10 | 10 |
| Resin component 2 | - | - | - | - | - | - | - | - | - |
| Liquid rubber | - | - | - | - | - | - | - | - | - |
| Zinc oxide | 2.0 | 2.0 | 2.0 | 2.0 | 2.0 | 2.0 | 2.0 | 2.0 | 2.0 |
| Antioxidant | 1.0 | 1.0 | 1.0 | 1.0 | 1.0 | 1.0 | 1.0 | 1.0 | 1.0 |
| Stearic acid | 2.0 | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 2.0 | 2.0 |
| Sulfur | 1.0 | 1.0 | 1.0 | 1.0 | 1.0 | 1.0 | 1.0 | 1.0 | 1.0 |
| Vulcanization accelerator 1 | 1.0 | 1.0 | 1.0 | 1.0 | 1.0 | 1.0 | 1.0 | 1.0 | 1.0 |

|  | Rubber layer | | | | | | | | |
|---|---|---|---|---|---|---|---|---|---|
|  | K | L | M | N | O | P | Q | R | S |
| Compounding amount (part by mass) | | | | | | | | | |
| Vulcanization accelerator 2 | 0.5 | 0.5 | 0.5 | 0.5 | 0.5 | 0.5 | 0.5 | 0.5 | 0.5 |
| Physical properties | | | | | | | | | |
| Tg (°C) | -30 | -40 | -32 | -26 | -37 | -29 | -16 | -45 | -40 |
| 30°C $E_*$ (MPa) | 6.3 | 6.0 | 5.8 | 6.5 | 6.2 | 6.0 | 6.0 | 3.0 | 7.2 |
| 30°C tan $\delta$ | 0.20 | 0.17 | 0.19 | 0.22 | 0.19 | 0.21 | 0.12 | 0.06 | 0.18 |

Table 2

|  | Example | | | | | | | | |
|---|---|---|---|---|---|---|---|---|---|
|  | 1 | 2 | 3 | 4 | 5 | 6 | 7 | 8 | 9 |
| Outermost layer | A | B | C | D | E | F | G | H | I |
| First intermediate layer | Q | Q | Q | Q | Q | Q | Q | Q | Q |
| Second intermediate layer | - | - | - | - | - | - | - | - | - |
| Innermost layer | R | R | R | R | R | R | R | R | R |
| T(°C) | -23 | -23 | -23 | -22 | -25 | -23 | -23 | -23 | -26 |
| $E_{*T}$ (MPa) | 6.5 | 6.6 | 6.7 | 6.5 | 6.6 | 7.0 | 7.0 | 7.0 | 7.0 |
| $E_{*B}$ (MPa) | 3.0 | 3.0 | 3.0 | 3.0 | 3.0 | 3.0 | 3.0 | 3.0 | 3.0 |
| t1 (mm) | 3.0 | 3.0 | 3.0 | 3.0 | 3.0 | 3.0 | 3.0 | 3.0 | 3.0 |
| t2 (mm) | 5.0 | 5.0 | 5.0 | 5.0 | 5.0 | 5.0 | 5.0 | 5.0 | 5.0 |
| (t1/t2)×\|T\| | 13.8 | 13.8 | 13.8 | 13.2 | 15.0 | 13.8 | 13.8 | 13.8 | 15.6 |
| $t1/H_1$ | 0.43 | 0.43 | 0.43 | 0.43 | 0.43 | 0.43 | 0.43 | 0.43 | 0.43 |
| $E_{*T}/(t1/H_1)$ | 15.2 | 15.4 | 15.6 | 15.2 | 15.4 | 16.3 | 16.3 | 16.3 | 16.3 |
| $L_{95}/L_0$ | 0.50 | 0.50 | 0.50 | 0.50 | 0.50 | 0.50 | 0.50 | 0.50 | 0.50 |
| Ratio of areas of land parts in ground-contacting surface (%) | 68 | 68 | 68 | 68 | 68 | 68 | 68 | 68 | 68 |
| Ratio of groove area in center land part (%) | 27 | 27 | 27 | 27 | 27 | 27 | 27 | 27 | 27 |
| Ratio of groove area in shoulder land parts (%) | 30 | 30 | 30 | 30 | 30 | 30 | 30 | 30 | 30 |
| Low-density member | - | - | - | - | - | - | - | - | - |
| Noise deterioration suppression index | 120 | 122 | 140 | 138 | 132 | 150 | 156 | 168 | 166 |

|  | Example | | | | | | | |
|---|---|---|---|---|---|---|---|---|
|  | 10 | 11 | 12 | 13 | 14 | 15 | 16 | 17 |
| Outermost layer | J | K | H | H | H | H | H | H |
| First intermediate layer | Q | Q | Q | Q | Q | Q | Q | Q |
| Second intermediate layer | - | - | M | - | - | - | - | - |
| Innermost layer | R | R | R | R | R | R | R | R |
| T (°C) | -18 | -30 | -23 | -23 | -23 | -23 | -23 | -23 |

(continued)

| | Example | | | | | | | |
|---|---|---|---|---|---|---|---|---|
| | 10 | 11 | 12 | 13 | 14 | 15 | 16 | 17 |
| $E_{*T}$ (MPa) | 7.3 | 6.3 | 7.0 | 7.0 | 7.0 | 7.0 | 7.0 | 7.0 |
| $E_{*B}$ (MPa) | 3.0 | 3.0 | 3.0 | 3.0 | 3.0 | 3.0 | 3.0 | 3.0 |
| t1 (mm) | 3.0 | 3.0 | 3.0 | 3.0 | 3.0 | 3.0 | 3.0 | 2.0 |
| t2 (mm) | 5.0 | 5.0 | 5.0 | 5.0 | 5.0 | 5.0 | 5.0 | 6.0 |
| $(t1/t2) \times |T|$ | 10.8 | 10.8 | 13.8 | 13.8 | 13.8 | 13.8 | 13.8 | 7.7 |
| $t1/H_1$ | 0.43 | 0.43 | 0.43 | 0.43 | 0.43 | 0.43 | 0.43 | 0.29 |
| $E_{*T}/(t1/H_1)$ | 17.0 | 14.7 | 16.3 | 16.3 | 16.3 | 16.3 | 16.3 | 24.5 |
| $L_{95}/L_0$ | 0.50 | 0.50 | 0.50 | 0.50 | 0.50 | 0.90 | 0.50 | 0.50 |
| Ratio of areas of land parts in ground-contacting surface (%) | 68 | 68 | 68 | 68 | 68 | 68 | 75 | 68 |
| Ratio of groove area in center land part (%) | 27 | 27 | 27 | 27 | 30 | 27 | 27 | 27 |
| Ratio of groove area in shoulder land parts (%) | 30 | 30 | 30 | 30 | 27 | 30 | 30 | 30 |
| Low-density member | - | - | - | 1 | - | - | - | - |
| Noise deterioration suppression index | 178 | 110 | 176 | 182 | 152 | 150 | 178 | 154 |

Table 3

| | Comparative example | | | | | | | |
|---|---|---|---|---|---|---|---|---|
| | 1 | 2 | 3 | 4 | 5 | 6 | 7 | 8 |
| Outermost layer | K | K | L | M | N | N | O | P |
| First intermediate layer | - | Q | Q | Q | - | Q | Q | Q |
| Second intermediate layer | - | - | - | - | - | - | - | - |
| Innermost layer | R | S | R | R | R | S | R | R |
| T (°C) | -30 | -30 | -40 | -32 | -26 | -26 | -37 | -29 |
| $E_{*T}$ (MPa) | 6.3 | 6.3 | 6.0 | 5.8 | 6.5 | 6.5 | 6.2 | 6.0 |
| $E_{*B}$ (MPa) | 3.0 | 7.2 | 3.0 | 3.0 | 3.0 | 7.2 | 3.0 | 3.0 |
| t1 (mm) | 3.0 | 3.0 | 3.0 | 3.0 | 3.0 | 3.0 | 3.0 | 3.0 |
| t2 (mm) | 5.0 | 5.0 | 5.0 | 5.0 | 5.0 | 5.0 | 5.0 | 5.0 |
| $(t1/t2) \times |T|$ | 18.0 | 18.0 | 24.0 | 19.2 | 15.6 | 15.6 | 22.2 | 17.4 |
| $t1/H_1$ | 0.43 | 0.43 | 0.43 | 0.43 | 0.43 | 0.43 | 0.43 | 0.43 |
| $E_{*T}/(t1/H_1)$ | 14.7 | 14.7 | 14.0 | 13.5 | 15.2 | 15.2 | 14.5 | 14.0 |
| $L_{95}/L_0$ | 0.50 | 0.50 | 0.50 | 0.50 | 0.50 | 0.50 | 0.50 | 0.50 |
| Ratio of areas of land parts in ground-contacting surface (%) | 68 | 68 | 68 | 68 | 68 | 68 | 68 | 68 |
| Ratio of groove area in center land part (%) | 27 | 27 | 27 | 27 | 27 | 27 | 27 | 27 |
| Ratio of groove area in shoulder land parts (%) | 30 | 30 | 30 | 30 | 30 | 30 | 30 | 30 |
| Low-density member | - | - | - | - | - | - | - | - |
| Noise deterioration suppression index | 90 | 88 | 94 | 96 | 94 | 94 | 98 | 100 |

REFERENCE SIGNS LIST

| 1 | Tread part |
|---|---|
| 2 | Land part |
| 4 | Line segment connecting ends of tread surface |
| 5 | Straight line parallel to line segment 4 and passing through the deepest part of groove bottom of circumferential groove |
| 6 | Outermost layer |
| 7 | Intermediate layer |
| 8 | Innermost layer |
| 9 | Extension line of outermost part of intermediate layer |
| 10 | Tread surface |
| 11, 12, 13, 14 | Circumferential groove |
| 15 | Groove wall of circumferential groove |
| 16 | Outer shoulder land part |
| 17 | Inner shoulder land part |
| 18 | Outer center land part |
| 19 | Inner center land part |
| 20 | Center land part |
| 21 | Shoulder lateral groove |
| 22 | Shoulder sipe |
| 23 | Center sipe |
| 31 | Bead core |
| 32 | Side wall |
| 33 | Bead part |
| 34 | Carcass |
| 35 | Belt |
| 36 | Band |
| 37 | Concave groove |
| 38 | Rim |
| 39 | Noise suppressing body |
| 61 | Edge band |
| 62 | Full band |
| C | Tire equator |
| CL | Tire equatorial plane |
| To | Outer ground-contacting end |
| Ti | Inner ground-contacting end |
| W | Tire width direction |

**Claims**

1. A tire comprising a tread part (1),

   wherein the tread part comprises

   an outermost layer (6) constituting a tread surface,
   an innermost layer (8) adjacent to an outer side of a belt layer (35) in a tire radial direction, and
   one or more intermediate layers (7) located between the outermost layer and the innermost layer,

   wherein each of the outermost layer, the innermost layer, and the intermediate layer is composed of a rubber composition comprising a rubber component,
   wherein the rubber component constituting the outermost layer comprises a styrene-butadiene rubber having a glass transition temperature of -80°C or higher and -40°C or lower, preferably -70°C or higher and -40°C or lower, more preferably -65°C or higher and -40°C or lower, further preferably -60°C or higher and -40°C or lower, particularly preferably -60°C or higher and -45°C or lower,
   wherein a glass transition temperature T, in °C, of a rubber composition constituting the outermost layer is -35 or higher, preferably -32 or higher, more preferably -29 or higher and 0 or lower, and
wherein, when a complex elastic modulus at 30°C of the outermost layer is defined as $E_{*T}$, in MPa, and a complex elastic modulus at 30°C of the innermost layer is defined as $E_{*B}$, in MPa, $E_{*T} > E_{*B}$.

2. The tire according to claim 1, wherein a content of the styrene-butadiene rubber having a glass transition point of -80°C or higher and -40°C or lower in the rubber composition constituting the outermost layer is 50% by mass or more and 90% by mass or less.

3. The tire according to claim 1 or 2, wherein a thickness t1, in mm, of the outermost layer, a thickness of t2, in mm, of the intermediate layer, and T satisfy the following inequality (1),

$$(t1/t2) \times |T| > 0.90 \quad \cdots \quad (1).$$

4. The tire according to any one of claims 1 to 3, wherein the rubber composition constituting the outermost layer comprises silica having an average primary particle size of 18 nm or less.

5. The tire according to any one of claims 1 to 4, wherein a total content of silica and a softening agent based on 100 parts by mass of the rubber component of the rubber composition constituting the outermost layer is 110 parts by mass or more.

6. The tire according to any one of claims 1 to 5,

   wherein the rubber composition constituting the outermost layer comprises a softening agent comprising a resin component, and
   wherein a content of the resin component in the softening agent is 30% by mass or more.

7. The tire according to any one of claims 1 to 6,

   wherein the tread part comprises

   two or more circumferential grooves (12, 13) extending continuously in a tire circumferential direction,
   a pair of shoulder land parts (16, 17) partitioned off by the circumferential grooves and ground-contacting ends (To, Ti), and
   a center land part (18, 19) located between the pair of shoulder land parts, and

   wherein a deepest part of a groove bottom in at least one circumferential groove among the circumferential grooves is formed to be located inside in the tire radial direction with respect to an outermost part of the intermediate layer.

8. The tire according to claim 7, wherein, when a distance between a line segment connecting tread surface ends and a straight line parallel to the line segment and passing through the deepest part in the circumferential groove comprising the deepest part is defined as $H_1$, in mm, $H_1$, t1, and $E_{*T}$ satisfy the following inequality (2),

$$E_{*T}/(t1/H_1) \geq 6.0 \quad \cdots \quad (2).$$

9. The tire according to claim 7 or 8, wherein, when a groove width, in a tread surface, of the circumferential groove located on the outermost side when the tire is mounted on a vehicle is defined as $L_0$ and a groove width at a 95% position of the deepest part of the groove bottom of the circumferential groove located on the outermost side when the tire is mounted on the vehicle is defined as $L_{95}$, $L_{95}/L_0$ is 0.20 or more and 0.80 or less.

10. The tire according to any one of claims 7 to 9, wherein a ratio of an area of a land part in a ground-contacting surface is 60% or more and 80% or less.

11. The tire according to any one of claims 7 to 10, wherein a ratio of groove areas in the shoulder land parts is greater than a ratio of a groove area in the center land part.

12. The tire according to any one of claims 1 to 11, the tire comprising, on a tire inner circumferential surface of the tread part, one or more low-density members selected from the group consisting of a sealant layer, a noise suppressing body (39), and a three-dimensional network structure.

13. The tire according to any one of claims 1 to 12, wherein the rubber composition constituting the outermost layer comprises 105 parts by mass or more, preferably 105 to 150 parts by mass of silica based on 100 parts by mass of the rubber component.

14. The tire according to any one of claims 1 to 13, wherein the rubber composition constituting the outermost layer comprises 25 parts by mass or more, preferably 25 to 100 parts by mass of a softening agent based on 100 parts by mass of the rubber component.

15. The tire according to any one of claims 1 to 14, wherein the rubber composition constituting the outermost layer comprises a liquid rubber.

**Patentansprüche**

1. Reifen, umfassend einen Laufstreifenteil (1),

   wobei der Laufstreifenteil umfasst:

   eine äußerste Schicht (6), die eine Laufstreifenoberfläche bildet,
   eine innerste Schicht (8), die zu einer äußeren Seite einer Gürtelschicht (35) in einer Reifenradialrichtung benachbart ist, und
   eine oder mehrerer Zwischenschichten (7), die sich zwischen der äußersten Schicht und der innersten Schicht befinden,

   wobei jede von der äußersten Schicht, der innersten Schicht und der Zwischenschicht mit einer Kautschukzusammensetzung aufgebaut ist, die eine Kautschukkomponente umfasst,
   wobei die Kautschukkomponente, welche die äußerste Schicht bildet, einen Styrol-Butadien-Kautschuk umfasst, der eine Glasübergangstemperatur von -80°C oder höher und -40°C oder niedriger aufweist, bevorzugt -70°C oder höher und -40°C oder niedriger, bevorzugter -65°C oder höher und -40°C oder niedriger, weiter bevorzugt -60°C oder höher und -40°C oder niedriger, besonders bevorzugt -60°C oder höher und -45°C oder niedriger,
   wobei eine Glasübergangstemperatur T, in °C, einer Kautschukzusammensetzung, welche die äußerste Schicht bildet, -35 oder höher, bevorzugt -32 oder höher, bevorzugter -29 oder höher und 0 oder niedriger ist, und
   wobei, wenn ein komplexer Elastizitätsmodul bei 30°C der äußersten Schicht als $E_{*T}$, in MPa, definiert ist, und ein komplexer Elastizitätsmodul bei 30°C der innersten Schicht als $E^*B$, in MPa, definiert ist, $E_{*T} > E_{*B}$.

2. Reifen nach Anspruch 1, wobei ein Gehalt des Styrol-Butadien-Kautschuks, der einen Glasübergangspunkt von -80°C oder höher und -40°C oder niedriger aufweist, in der Kautschukzusammensetzung, welche die äußerste Schicht bildet, 50 Massen-% oder mehr und 90 Massen-% oder weniger beträgt.

3. Reifen nach Anspruch 1 oder 2, wobei eine Dicke t1, in mm, der äußersten Schicht, eine Dicke von t2, in mm, der Zwischenschicht, und T der folgenden Ungleichung (1) genügen,

$$(t1/t2) \times |T| > 0{,}90 \cdots (1).$$

4. Reifen nach einem der Ansprüche 1 bis 3, wobei die Kautschukzusammensetzung, welche die äußerste Schicht bildet, Siliziumdioxid umfasst, das eine mittlere Primärpartikelgröße von 18 nm oder weniger aufweist.

5. Reifen nach einem der Ansprüche 1 bis 4, wobei ein Gesamtgehalt an Siliziumdioxid und einem Weichmacher, bezogen auf 100 Massenteile der Kautschukkomponente der Kautschukzusammensetzung, welche die äußerste Schicht bildet, 110 Massenteile oder mehr beträgt.

6. Reifen nach einem der Ansprüche 1 bis 5,

wobei die Kautschukzusammensetzung, welche die äußerste Schicht bildet, einen Weichmacher umfasst, der einen Harzbestandteil umfasst, und

wobei ein Gehalt des Harzbestandteils in dem Weichmacher 30 Massen-% oder mehr beträgt.

7. Reifen nach einem der Ansprüche 1 bis 6,

wobei der Laufstreifenteil umfasst:

zwei oder mehr Umfangsrillen (12, 13), die sich durchgehend in einer Reifenumfangsrichtung erstrecken, ein Paar von Schulterpositivprofilteilen (16, 17), die durch die Umfangsrillen und Bodenkontakt-Enden (To, Ti) abgeteilt sind, und
einen Zentrumspositivprofilteil (18, 19), der sich zwischen dem Paar von Schulterpositivprofilteilen befindet, und

wobei ein tiefster Teil eines Rillenbodens in mindestens einer Umfangsrille unter den Umfangsrillen ausgebildet ist, um sich in der Reifenradialrichtung innen in Bezug auf einen äußersten Teil der Zwischenschicht zu befinden.

8. Reifen nach Anspruch 7, wobei, wenn ein Abstand zwischen einer Strecke, die Laufstreifenoberflächen-Enden verbindet, und einer Geraden, die parallel zu der Strecke ist und durch den tiefsten Teil in der den tiefsten Teil umfassenden Umfangsrille verläuft, als $H_1$, in mm, definiert ist, $H_1$, t1 und $E_{*T}$ der folgenden Ungleichung (2) genügen,

$$E_{*T}/(t1/H_1) \geq 6{,}0 \cdots (2).$$

9. Reifen nach Anspruch 7 oder 8, wobei, wenn eine Rillenbreite, in einer Laufstreifenoberfläche, der Umfangsrille, die sich auf der äußersten Seite befindet, wenn der Reifen an einem Fahrzeug montiert ist, als $L_0$ definiert ist, und eine Rillenbreite an einer 95%-Position des tiefsten Teils des Rillenbodens der Umfangsrille, die sich auf der äußersten Seite befindet, wenn der Reifen an dem Fahrzeug montiert ist, als $L_{95}$ definiert ist, $L_{95}/L_0$ 0,20 oder mehr und 0,80 oder weniger beträgt.

10. Reifen nach einem der Ansprüche 7 bis 9, wobei ein Anteil einer Fläche eines Positivprofilteils in einer Bodenkontaktoberfläche 60% oder mehr und 80% oder weniger beträgt.

11. Reifen nach einem der Ansprüche 7 bis 10, wobei ein Anteil von Rillenflächen in den Schulterpositivprofilteilen größer ist als ein Anteil einer Rillenfläche in dem Zentrumspositivprofilteil.

12. Reifen nach einem der Ansprüche 1 bis 11, wobei der Reifen, auf einer inneren Reifenumfangsfläche des Laufstreifenteils, ein oder mehrere Elemente mit niedriger Dichte umfasst, welche ausgewählt sind aus der Gruppe bestehend aus einer Dichtmittelschicht, einem geräuschunterdrückenden Körper (39) und einer dreidimensionalen Netzwerkstruktur.

13. Reifen nach einem der Ansprüche 1 bis 12,
wobei die Kautschukzusammensetzung, welche die äußerste Schicht bildet, 105 Massenteile oder mehr, bevorzugt 105 bis 150 Massenteile Siliziumdioxid umfasst, bezogen auf 100 Massenteile der Kautschukkomponente.

14. Reifen nach einem der Ansprüche 1 bis 13,
wobei die Kautschukzusammensetzung, welche die äußerste Schicht bildet, 25 Massenteile oder mehr, bevorzugt 25 bis 100 Massenteile eines Weichmachers umfasst, bezogen auf 100 Massenteil der Kautschukkomponente.

15. Reifen nach einem der Ansprüche 1 bis 14,
wobei die Kautschukzusammensetzung, welche die äußerste Schicht bildet, einen flüssigen Kautschuk umfasst.

**Revendications**

1. Pneumatique comprenant une partie formant bande de roulement (1),

dans lequel la partie formant bande de roulement comprend

une couche la plus extérieure (6) constituant une surface de bande de roulement,

une couche la plus extérieure (8) adjacente à un côté extérieur d'une couche de ceinture (35) dans une direction radiale du pneumatique, et

une ou plusieurs couches intermédiaires (7) situées entre la couche la plus extérieure et la couche la plus intérieure,

dans lequel chacune de la couche la plus extérieure, de la couche la plus intérieure, et de la couche intermédiaire est composée d'une composition de caoutchouc comprenant un composant de caoutchouc,

dans lequel le composant de caoutchouc constituant la couche la plus extérieure comprend un caoutchouc styrène butadiène ayant une température de transition vitreuse de -80 °C ou plus et de -40 °C ou moins, de préférence de -70 °C ou plus et de -40 °C ou moins, de manière encore préférée de -65 °C ou plus et de -40 °C ou moins, de manière encore plus préférée de -60 °C ou plus et de -40 °C ou moins, et de toute préférence de -60 °C ou plus et de -45 °C ou moins,

dans lequel une température de transition vitreuse T, en °C, d'une composition de caoutchouc constituant la couche la plus extérieure est de -35 ou plus, de préférence de -32 ou plus, de manière préférée de -29 ou plus et de 0 ou moins, et

dans lequel, quand un module d'élasticité complexe à 30 °C de la couche la plus extérieure est défini comme $E^*_T$, en MPa, et un module d'élasticité complexe à 30 °C de la couche la plus intérieure est défini comme $E^*_B$, en MPa, $E^*_T > E^*_B$.

2. Pneumatique selon la revendication 1, dans lequel une teneur en caoutchouc styrène butadiène ayant un point de transition vitreuse de -80 °C ou plus et de -40 °C ou moins dans la composition de caoutchouc constituant la couche la plus extérieure est de 50 % en masse ou plus et de 90 % en masse ou moins.

3. Pneumatique selon la revendication 1 ou 2, dans lequel une épaisseur t1, en mm, de la couche la plus extérieure, une épaisseur t2, en mm, de la couche intermédiaire, et T satisfont l'inégalité (1) suivante :

$$(t1/t2) \times |T| > 0{,}90 \quad \cdots \quad (1).$$

4. Pneumatique selon l'une quelconque des revendications 1 à 3, dans lequel la composition de caoutchouc constituant la couche la plus extérieure comprend une silice ayant une taille particulaire primaire moyenne de 18 nm ou moins.

5. Pneumatique selon l'une quelconque des revendications 1 à 4, dans lequel une teneur totale en silice et un agent ramollissant sur la base de 100 parts en masse du composant de caoutchouc de la composition de caoutchouc constituant la couche la plus extérieure est de 110 parts en masse ou plus.

6. Pneumatique selon l'une quelconque des revendications 1 à 5,

dans lequel la composition de caoutchouc constituant la couche la plus extérieure comprend un agent ramollissant comprenant un composant de résine, et

dans lequel une teneur en composant de résine dans l'agent ramollissant est de 30 % en masse ou plus.

7. Pneumatique selon l'une quelconque des revendications 1 à 6,

dans lequel la partie formant bande de roulement comprend

deux ou plusieurs rainures circonférentielles (12, 13) s'étendant en continu dans une direction circonférentielle du pneumatique,

une paire de parties en relief d'épaulement (16, 17) divisées par les rainures circonférentielles et des extrémités de contact au sol (To, Ti), et

une partie en relief centrale (18, 19) située entre la paire de parties en relief d'épaulement, et

dans lequel une partie la plus profonde d'un fond de rainure dans au moins une rainure circonférentielle parmi les rainures circonférentielles est formée de façon à être située à l'intérieur dans la direction radiale du pneumatique par rapport à une partie la plus extérieure de la couche intermédiaire.

8. Pneumatique selon la revendication 7, dans lequel, quand une distance entre un segment de ligne connectant des extrémités de surfaces de bande de roulement et une ligne droite parallèle au segment de ligne et passant à travers la partie la plus profonde dans la rainure circonférentielle comprenant la partie la plus profonde est définie comme $H_1$, en mm, $H_1$, t1 et $E^*_T$ satisfont l'inégalité (2) suivante :

$$E^*_T/(t_1/H_1) \geq 6{,}0 \quad \cdots (2).$$

**9.** Pneumatique selon la revendication 7 ou 8, dans lequel, quand une largeur de rainure, dans une surface de bande de roulement, de la rainure circonférentielle située sur le côté le plus extérieur, quand le pneumatique est monté sur un véhicule, est définie comme La, et qu'une largeur de rainure à une position à 95 % de la partie la plus profonde du fond de rainure de la rainure circonférentielle située sur le côté le plus extérieur, quand le pneumatique est monté sur le véhicule, est définie comme $L_{95}$, $L_{95}/L_0$ est 0,20 ou plus et 0,80 ou moins.

**10.** Pneumatique selon l'une quelconque des revendications 7 à 9, dans lequel un rapport d'une zone d'une partie en relief dans une surface de contact au sol est de 60 % ou plus et de 80 % ou moins.

**11.** Pneumatique selon l'une quelconque des revendications 7 à 10, dans lequel un rapport de zones de rainure dans les parties en relief d'épaulement est supérieur à un rapport d'une zone de rainure dans la partie en relief centrale.

**12.** Pneumatique selon l'une quelconque des revendications 1 à 11, le pneumatique comprenant, sur une surface circonférentielle intérieure du pneumatique de la partie formant bande de roulement, un ou plusieurs éléments de faible intensité sélectionnés parmi le groupe constitué d'une couche d'étanchéité, d'un corps de suppression de bruit (29), et d'une structure en réseau tridimensionnelle

**13.** Pneumatique selon l'une quelconque des revendications 1 à 12, dans lequel la composition de caoutchouc constituant la partie la plus extérieure comprend 105 parts en masse du composant de caoutchouc.

**14.** Pneumatique selon l'une quelconque des revendications 1 à 13, dans lequel la composition de caoutchouc constituant la couche la plus extérieure comprend 25 parts en masse ou plus, de préférence 25 à 100 parts en masse ou plus d'un agent ramollissant sur la base de 100 parts en masse du composant de caoutchouc.

**15.** Pneumatique selon l'une quelconque des revendications 1 à 14, dans lequel la composition de caoutchouc constituant la couche la plus extérieure comprend un caoutchouc liquide.

# FIG. 1

# FIG.2

# FIG.3

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06156016 A
- EP 3950387 A
- JP 2020023152 A
- JP 2019142503 A
- JP 2018090131 A